# FASCICULE DE BREVET EUROPEEN

(11) **EP 2 101 594 B1**
(45) Date de publication et mention de la délivrance du brevet: **19.03.2014**
(21) Numéro de dépôt: 07870279.2
(22) Date de dépôt: 13.11.2007
(51) Int. Cl.: A23D 9/00, A23D 9/02, A23L 1/302, A23L 1/303, A23L 1/39, A23L 1/24, A23L 1/30

(54) **COMPOSITION LIPIDIQUE PRÉSENTANT DES PROPRIÉTÉS D'INTÉRÊT**
LIPIDZUSAMMENSETZUNG MIT INTERESSENSEIGENSCHAFTEN
LIPIDIC COMPOSITION HAVING PROPERTIES OF INTEREST

(30) Priorité: 19.12.2006 FR 0611077
(43) Date de publication de la demande: 23.09.2009
(73) Titulaire: Lesieur S.A.S., 92665 Asnières-sur-Seine cedex (FR)
(72) Inventeur: FRIBOURG, Jean-Louis, 75016 Paris (FR); VIGNERON, Pierre-Yves, 59140 Dunkerque (FR); MANGIN, Catherine, 75015 Paris (FR); STOCLIN, Bernard, 59380 Armbouts-Cappelle (FR)
(74) Mandataire: Grosset-Fournier, Chantal Catherine
(86) Numéro de dépôt international: PCT/FR2007/001870
(87) Numéro de publication internationale: WO 2008/074936

(56) Documents cités:
- EP-A1- 0 639 333
- WO-A-01/52660
- FR-A1- 2 878 413
- SOUCI S W ET AL: "Food Composition and Nutrition Tables, OLIVE OIL" FOOD COMPOSITION AND NUTRITION TABLES = DIE ZUSAMMENSETZUNG DER LEBENSMITTEL NAEHRWERT-TABELLEN = LA COMPOSITION DES ALIMENTS TABLEAUX DES VALEURS NUTRITIVES, STUTTGART : MEDPHARM, DE, 2000, page 181, XP002398424 ISBN: 3-88763-076-9
- ANONYMOUS: "Opinion of the Scientific Panel on Dietetic Products, Nutrition and Allergies on a request from the Commission related to nutrition claims concerning omega-3 fatty acids, monounsaturated fat, polyunsaturated fat and unsaturated fat" INTERNET CITATION, [Online] 2005, XP002443366 Extrait de l'Internet: URL:http://www.efsa.europa.eu/etc/medialib /efsa/science/nda/nda_opinions/1096.Par.00 01.File.dat/nda_op_ej253_nutritionclaimsfo rfats_en_revised21.pdf> [extrait le 2007-07-19]
- ANONYMOUS: "Colza: une huile et un tourteau aux nombreuses qualités" INTERNET CITATION, [Online] juillet 2001 (2001-07), XP002443367 Extrait de l'Internet: URL:http://www.amsol.asso.fr/actualites/Nu triti01.PDF> [extrait le 2007-07-19]

## Description

La présente invention a pour objet une composition lipidique présentant à la fois des propriétés nutritionnelles et organoleptiques d'intérêt.

L'invention concerne également l'utilisation de ladite composition lipidique dans des compositions alimentaires.

On connaît aujourd'hui l'intérêt nutritionnel des mélanges d'huiles végétales apportant les deux acides gras essentiels, l'acide alpha-linolénique (précurseur de la famille ω3) et l'acide linoléique (précurseur de la famille ω6). Ces mélanges permettent d'adapter la proportion des différents acides gras entre eux en fonction du développement des connaissances et des recommandations en nutrition des lipides.

Ainsi l'huile ISIO4 développée puis commercialisée par la demanderesse, contient 10% d'acides gras saturés, 60% d'acides gras monoinsaturés, principalement de l'acide oléique (ω9), et 30% d'acides gras polyinsaturés dont 28,1% d'acide linoléique (ω6) et 1,9% d'acide alpha-linolénique (ω3), avec un rapport ω6/ω3 voisin de 15.

De même, la composition objet de la demande de brevet FR 2 878 413, développée puis commercialisée par la demanderesse sous les marques ISIO Protect et ISIO4 Olive, contient 10% d'acides gras saturés, 57% d'acides gras monoinsaturés et 33% d'acides gras polyinsaturés, comprenant 27,5% d'acide linoléique (ω6) et 5,5% d'acide alpha-linolénique (ω3), dans un rapport ω6/ω3 de 5 correspondant mieux aux recommandations actuelles des nutritionnistes pour l'ensemble des lipides de la diète quotidienne. Sous cet aspect, ladite composition lipidique peut être qualifiée d'"équilibrée".

On connaît également l'intérêt grandissant des nutritionnistes pour l'acide docosahexaénoïque (DHA), dérivé supérieur omega 3 de l'acide alpha-linolénique, pour ses propriétés physiologiques dans les domaines du développement cérébral [Uauy R. et al. 2001 Lipids 36(9) : 885-895 *-* Heird WC et al. 2005 Ann Rev Nutr 25 : 549-571], de la cognition, de la vision *[*SanGiovanni JP et al. 2005 Prog Retin Eye Res 24(1) :87-138*]* et du déclin cognitif [Schaefer EJ et al. 2006 Arch Neurol 63(11) : 1545-1550]. Le DHA est en effet le principal acide gras constitutif des membranes des neurones et des cellules à bâtonnets de la rétine et il intervient activement dans les mécanismes de neurotransmission [Vancassel S. et al. 2004 OCL 11(1) :58-65 *-* Chalon S. et al. 2006 Prost Leuk Essent Fatty Acids 75 : 259-269].

Or il est de notoriété que le taux de conversion du précurseur alpha-linolénique en DHA est très faible chez l'être humain, en particulier chez l'homme (moins de 1 %) [Burdge GC et al., 2006 Prost Leukot Essent Fatty Acids, 75(3) :161-168].

Par ailleurs l'apport en DHA dans l'alimentation courante est parfois jugé insuffisant, aussi cet acide gras fait l'objet d'une recommandation d'apport quotidien de 120 mg chez l'homme et de 250 mg chez la femme enceinte ou allaitante [Apports Nutritionnels Conseillés pour la Population Française, Editions TecDoc, 2001].

Il existe à ce jour peu de documents décrivant des mélanges d'huiles alimentaires, riches en acide alpha-linolénique (ω3) et en son dérivé omega 3 supérieur l'acide docosahexaénoïque (DHA), et qui garantissent simultanément des qualités nutritionnelles intéressantes et une bonne conservation organoleptique dans le temps.

On peut ainsi citer les mélanges de triglycérides d'acides gras qui font l'objet du brevet EP 0 639 333 et qui dans leur généralité contiennent des acides gras à chaînes longues à la fois des deux familles ω3 et ω6, de degré d'insaturation supérieur à 3 et dont les modes de réalisation préférés contiennent une huile riche en acides gras de la famille omega 6 de degré d'insaturation d'au moins 3 apportant de l'acide gamma-linolénique, choisie parmi les huiles d'onagre, de bourrache et de pépins de cassis, ainsi qu'une huile riche en précurseur linoléique omega 6, choisie parmi les huiles de tournesol, de pépins de raisin ou de carthame. On constate dans les exemples cités que les teneurs en acide alpha-linolénique sont inférieures à 4% avec un rapport « acides gras omega 6/ acides gras omega 3 » supérieur à 4,5. De telles compositions lipidiques ne sont donc pas suffisamment équilibrantes au plan de l'apport en acide alpha-linolénique de la famille omega 3. Par ailleurs le brevet en question ne donne pas de précisions sur la conservation des propriétés organoleptiques de telles compositions au cours du temps.

On peut également citer la demande internationale WO 03/056939 qui associe des compositions d'acides gras polyinsaturés de la famille n-3 avec des acides gras monoinsaturés, mais dans lesquelles le rapport entre acides gras monoinsaturés et polyinsaturés varie de 30/1 à 70/1. De telles compositions lipidiques sont alors trop déséquilibrées au plan nutritionnel si on les destine aux consommateurs en général. Du fait de leur grande richesse en acides gras monoinsaturés, l'apport en acides précurseurs linoléique (omega 6) et surtout alpha-linolénique (omega 3) s'avère insuffisant. De surcroît ces deux acides gras essentiels ne sont pas dans un rapport optimal. Ainsi dans l'exemple cité contenant 10% d'huile de poisson et 27% d'huile d'olive, la teneur en acide linoléique est inférieure à 12%, la teneur en acide alpha-linolénique est inférieure à 1% et le rapport linoléique/alpha-linolénique est supérieur à 25. Par ailleurs le brevet en question ne donne pas de précisions sur la conservation des propriétés organoleptiques de telles compositions au cours du temps.

On peut enfin citer le brevet EP 0494707 qui revendique des compositions d'huile pour salade comprenant au moins 2% d'huile d'olive et au moins 10% d'huiles végétales non raffinées. Les réalisations données en exemple contiennent entre 5% et 20% d'huile d'olive et entre 30% et 95% d'huiles végétales non raffinées, c'est-à-dire pas plus de 50% d'huiles végétales raffinées dans le mélange final. Ces compositions données en exemple présentent par ailleurs des rapports linoléique/alpha-linolénique déséquilibrés supérieurs à 12, moins de 4% d'acide alpha-linolénique de la famille omega 3 et plus de 40% d'acides gras polyinsaturés qui créent un environnement trop riche en omega 6 si la composition doit contenir des acides gras supérieurs de la famille omega 3 comme l'acide docosahexaénoïque (DHA).

Il est connu que, parmi les huiles végétales utilisés dans les compositions lipidiques alimentaires, l'huile de colza, notamment raffinée, peut prendre rapidement au cours de sa conservation, particulièrement à la lumière, un goût d'altération décrit comme goût de « graine crue et verte » et surtout comme goût « genre goût de poisson ». En corollaire, il est aussi connu que les mélanges d'huiles raffinées contenant des quantités significatives d'acide alpha-linolénique (ω3) apporté par notamment les huiles de colza (Canola), de soja, de noix, de cameline, de lin, de périlla, d'inca inchi, de pépins de kiwi ou leurs mélanges peuvent perdre rapidement leur neutralité de goût au cours de leur vieillissement sous l'action de la lumière, conjuguée à celle de l'air et de la température.

Il est aussi notoire que les ingrédients lipidiques riches en dérivés supérieurs de la série ω3 comme le DHA (acide gras contenant six insaturations) sont particulièrement fragiles vis-à-vis-des phénomènes d'autoxydation qui peuvent affecter leur intérêt nutritionnel et leur qualité organoleptique, particulièrement au cours de leur conservation, que ce soit à l'état pur ou en mélange avec d'autres huiles végétales. Ainsi, les ingrédients lipidiques riches en acide docosahexaénoïque (DHA) et à basse teneur en acide eicosapentaénoïque (EPA), qu'ils soient marins ou microalgaux, sont particulièrement fragiles tant au plan organoleptique qu'au plan oxydatif, lorsqu'ils contiennent plus de 25% en poids de DHA.

L'homme du métier est donc confronté à la difficulté technique de préparer une composition lipidique à base d'huiles végétales majoritairement raffinées contenant notamment de l'huile de colza (Canola) et accessoirement des huiles de soja, de noix, de cameline, de lin, de périlla, d'inca inchi, de pépins de kiwi ou leurs mélanges, et des ingrédients lipidiques riches en DHA et à basse teneur en EPA, ledit mélange devant présenter des propriétés satisfaisantes du point de vue nutritionnel et organoleptique, même après conservation de plusieurs mois.

Pour préparer une telle composition lipidique, il est donc nécessaire de masquer suffisamment le goût sui-generis des ingrédients riches en DHA, qu'ils proviennent de lipides de poissons ou de microalgues marines, de masquer suffisamment le goût d'altération des ingrédients riches en DHA au cours du vieillissement de la composition, de masquer suffisamment le goût d'altération de l'huile de colza (ou autre huile riche en acide alpha-linolénique) au cours de ce vieillissement, et de protéger la composition, lipidique de l'effet nuisible des divers rayonnements de la lumière, l'action de la lumière étant connue comme un facteur déterminant dans le développement des réactions d'autoxydation des lipides insaturés, particulièrement ceux riches en acides gras polyinsaturés de degré de polyinsaturation de 3 ou plus, comme particulièrement les acides gras alpha-linolénique et docosahexaénoïque de la famille omega 3.

En ce qui concerne le masquage du goût sui-generis des huiles riches en DHA d'origine marine ou microalgale et le masquage de leur goût d'altération ainsi nue celui de l'huile de colza, on peut citer la demande internationale WO 02/056709 qui concerne l'utilisation de substances aromatiques pour le masquage des mauvais goûts des huiles de poisson au cours de la digestion. Cette demande internationale décrit des capsules contenant majoritairement des huiles de poisson et comprenant à la fois un émulsifiant et une huile essentielle de persil ou de citronnelle ou de fenouil ou de menthe ou de menthol, afin d'éviter un goût et une haleine de poisson lors de l'éructation. Or, au vu de cette demande internationale, on constate qu'une telle utilisation de substances aromatiques pour masquer le mauvais goût des huiles de poisson peut conduire à deux types d'écueils :
- soit ces substances aromatiques sont dosées trop modestement en regard de la quantité d'huile de poisson en jeu et masquent insuffisamment les goûts sui-generis et les goûts d'altération de type "poisson" ;
- soit elles sont dosées à des teneurs plus élevées et conduisent à des notes aromatiques trop typées, en "nez" comme en "bouche", ce qui aboutit à des compositions lipidiques ne pouvant pas être consommées en l'état pour des utilisations culinaires courantes, par exemple comme huile de table pour assaisonnement. De surcroît les substances aromatiques revendiquées sont dans la plupart incompatibles au plan qualitatif avec des huiles de table courantes.

La présente invention a pour but de fournir une nouvelle composition lipidique présentant des propriétés organoleptiques et nutritionnelles satisfaisantes, ladite composition lipidique répondant plus spécifiquement aux besoins nutritionnels des consommateurs auxquels elle est destinée.

La présente invention a pour but de fournir une nouvelle composition lipidique équilibrante compensant l'insuffisance de l'apport en ω3 de l'alimentation quotidienne et adaptée aux personnes ayant besoin d'un supplément en DHA via leur alimentation courante.

La présente invention a pour but de fournir une nouvelle composition lipidique contenant notamment de l'huile de colza et des ingrédients lipidiques riches en DHA, qui soit satisfaisante au plan organoleptique et qui conserve de telles caractéristiques au cours de sa conservation à l'abri de la lumière, à température ambiante, avant ouverture.

La présente invention concerne une composition lipidique contenant plus de 97%, et de préférence plus de 97,8% de lipides d'origine végétale et comprenant au total :
- 58% à 77%, de préférence 59 à 75%, en particulier 60% à 70%, en particulier 67% en poids d'huile de colza notamment raffinée,
- 22% à 41 %, de préférence 24 à 39% en poids d'au moins une huile végétale, notamment raffinée, laquelle huile végétale contient moins de 4% d'acide alpha-linolénique et contient 72% à 92% d'acide oléique,
- 0,7% à 2,9%, en particulier 0,7% à 2,2%, en particulier 0,8% à 2,9%, de préférence 0,75% à 2,1 % en poids de lipides d'origine marine et/ou microalgale contenant de 25 à 45% d'acide docosahexaénoïque (DHA), de préférence de 27 à 43% de DHA, et contenant moins de 9% d'acide eicosapentaénoïque (EPA),
- 0,1% à 8%, de préférence, 0,2% à 5%, et encore de préférence 0,3% à 2% d'une première substance, lipidique, aromatique et sapide telle qu'une huile végétale à goût non raffinée ou vierge, autre qu'une huile d'olive, choisie parmi notamment les huiles vierges de noisette, de macadamia, d'amande, d'avocat, de cameline, de noix, d'amandon de pruneaux, de sésame, de lin, les huiles de fruits secs grillés ou torréfiés, les huiles de graines grillées ou torréfiées ou toutes combinaisons de ces huiles entre elles,
- de 0% à 0,10%, de préférence 0,001% à 0,01% d'une seconde substance aromatique et sapide provenant d'épices, d'aromates, de fruits, de plantes aromatiques telle qu'une huile essentielle, un extrait naturel, un extrait au CO₂ supercritique, une oléorésine, une absolue, notamment d'agrumes, de fruits secs, de coriandre, de basilic, d'herbes méditerranéennes, d'alliacées ou une molécule aromatique naturelle ou de synthèse ou toutes combinaisons de ces substances entre elles,
   ladite composition lipidique présentant les propriétés suivantes :
   * elle est stable à température ambiante à l'abri de la lumière avant ouverture pendant au moins 6 mois, notamment 12 mois et avantageusement 11 mois,
   * elle présente un rapport en poids acide linoléique/acide alpha-linolénique (ω6/ω3) variant de 2,4 à 3,9, et notamment de 2,6 à 3,9,
   * elle présente un rapport en poids acide oléique/acide linoléique (ω9/ω6) variant de 3,1 à 4,6,
   * elle présente un rapport en poids acide oléique/acide alpha-linolénique (ω9/ω3) variant de 9 à 14,
   * elle présente un rapport en poids DHA/EPA variant de 4 à 160, et
   * elle ne comprend pas d'acides gras polyinsaturés de la famille ω6 présentant un degré d'insaturation de 3.

Les huiles de colza raffinées ou non raffinées contiennent de 7 à 11% d'acide alpha-linolénique et plus particulièrement de 7,5 à 10,5% d'acide alpha-linolénique.

La composition définie ci-dessus a notamment été conditionnée en bouteilles de PET opaques.

L'originalité de la nouvelle composition objet de la présente invention réside en ce que sa composition nutritionnelle permet simultanément :
- d'abaisser le rapport ω6/ω3 linoléique/alpha-linolénique à une valeur inférieure à 4, conférant à la nouvelle composition un rôle d'huile plus "équilibrante", ce rapport ω6/ω3 abaissé permettant ainsi de compenser l'insuffisance de l'apport en acide alpha-linolénique (ω3) de l'alimentation quotidienne ; cet abaissement est obtenu simultanément par l'accroissement de la teneur en précurseur alpha-linolénique (ω3) et par la diminution de la teneur en précurseur linoléique (ω6),
- d'apporter une quantité significative d'acide gras supérieur à longue chaîne docosahexaénoïque de la série ω3 (DHA), compte tenu :
   * de l'insuffisance actuellement reconnue du degré de bioconversion du précurseur alpha-linolénique (ω3) en dérivé supérieur DHA chez l'humain, en particulier chez l'homme,
   * des préconisations d'apport quotidien en DHA (Apports Nutritionnels Conseillés pour la Population Française),
- de privilégier cet apport en DHA par rapport aux autres acides gras supérieurs à longue chaîne de la série ω3 tels que l'acide eicosapentaénoïque (EPA) dont la demanderesse a montré dans une expérimentation clinique antérieure (voir demande de brevet FR 2878413) que l'apport en précurseur alpha-linolénique (ω3) via une huile en contenant 5% en poids permettait une synthèse et une incorporation suffisante en EPA dans les phospholipides plasmatiques chez l'homme,
- d'accroître la teneur en acides gras monoinsaturés de la composition à un niveau optimal de façon à limiter la teneur en acide linoléique (omega 6) du mélange et ainsi protéger le DHA contre l'oxydation par un environnement lipidique favorable,
- d'assurer un apport en vitamine E proche de celui préconisé dans les Apports Nutritionnels Conseillés, grâce à la richesse naturelle des huiles en alpha-tocophérol et par une complémentation éventuelle en acétate de d-1-alpha-tocophérol de synthèse ou en extraits naturels riches en alpha-tocophérol, cet apport en vitamine E participant à la réduction du risque de stress oxydant chez l'utilisateur, et
- d'apporter optionnellement de la vitamine D pour compenser partiellement le manque en vitamine D de l'alimentation courante ou le manque d'exposition à la lumière solaire chez les personnes qui y sont insuffisamment exposées.

Une telle composition lipidique est particulièrement adaptée aux personnes ayant besoin d'un supplément DHA via leur alimentation, c'est-à-dire les personnes n'atteignant pas au moins les préconisations des Apports Nutritionnels Conseillés, celles dont l'alimentation est déséquilibrée ou encore les personnes ayant des besoins spécifiques, comme par exemple les femmes enceintes ou allaitantes ou encore les sujets âgés.

Pour atteindre les objectifs nutritionnels de la composition lipidique objet de l'invention, la demanderesse a eu avantageusement recours à une combinaison :
- d'un mélange d'huile de colza raffinée et d'une huile raffinée riche en acide oléique comme notamment l'huile de tournesol à haute teneur en acide oléique : l'huile de colza assure en effet l'apport nécessaire en acide alpha-linolénique (ω3) et une bonne teneur en acides gras monoinsaturés tandis que l'huile de tournesol à haute teneur en acide oléique évite d'apporter trop d'acides gras omega 6 tout en étant source de vitamine E ;
- d'un ou plusieurs ingrédients lipidiques riches en DHA et comparativement peu riches en EPA, par sélection d'huiles de poisson à teneur élevée en DHA et basse teneur en EPA et/ou d'huiles de microalgues à teneur élevée en DHA et basse teneur en EPA ;
- optionnellement d'une préparation huileuse d'acétate de d-1-alpha-tocophérol de synthèse et/ou d'extrait naturel huileux riches en alpha-tocophérol, et
- optionnellement d'une préparation huileuse de vitamine D, par exemple de vitamine D3.

Afin d'obtenir une composition qui soit satisfaisante au plan organolentique et qui conserve de telles caractéristiques au cours de sa conservation à température ambiante avant ouverture, la demanderesse a pu montrer, suite à des tests organoleptiques au cours d'essais de vieillissement et de conservation, que trois conditions devaient être réunies pour atteindre cet objectif de qualité organoleptique :
- masquer suffisamment le goût sui-generis des ingrédients riches en DHA, qu'ils proviennent de lipides de poissons ou de microalgues marines, par l'incorporation à la composition lipidique d'un ou plusieurs principe(s) aromatisants capable(s) de rendre imperceptible le goût sui-generis de ces ingrédients riches en DHA,
- masquer suffisamment le goût d'altération des ingrédients riches en DHA au cours du vieillissement de la composition, ainsi que le goût d'altération de l'huile de colza raffinée au cours de ce vieillissement, par un ou plusieurs principe(s) aromatisants capable(s) de rendre imperceptible les notes organoleptiques désagréables qui se développent dans le temps au cours de la conservation, et
- protéger la composition lipidique contre l'altération organoleptique et oxydative par les rayonnements de la lumière grâce à l'utilisation d'un contenant d'un degré d'opacité à la lumière suffisant, l'action de la lumière étant connue comme un facteur déterminant dans le développement des réactions d'autoxydation des lipides insaturés, particulièrement ceux riches en acides gras polyinsaturés de degré de polyinsaturation de 3 ou plus, comme particulièrement l'acide alpha-linolénique et le DHA.

La demanderesse a avantageusement constaté que la combinaison de moyens de masquage organoleptique et de protection physique contre la lumière permet d'obtenir des formules de ladite composition lipidique dont les caractéristiques organoleptiques restent satisfaisantes au cours de son vieillissement à température ambiante et avant ouverture. Au contraire, sans la mise en oeuvre de cette combinaison de masquage organoleptique et de protection contre la lumière, la composition peut subir une rapide altération organoleptique à la température ambiante.

En complément de ces mesures, la demanderesse a constaté que la mise en oeuvre d'anti-oxygènes naturels peut également contribuer, mais dans une moindre mesure, à renforcer la stabilité organoleptique de ladite composition, sans avoir recours à l'emploi d'anti-oxygènes chimiques.

En ce qui concerne le problème du masquage de l'altération du goût des huiles riches en DHA d'origine marine ou microalgale et celui de l'huile de colza, l'originalité de la présente invention consiste en l'utilisation d'une ou plusieurs huiles végétales à goût non raffinées ou vierges, autres que l'huile d'olive, qui confèrent des goûts adaptés aux différentes applications culinaires des huiles alimentaires.

Dans le cas présent, la demanderesse a recherché une huile végétale à goût non raffinée ou vierge autre que l'huile d'olive qui puisse :
- être utilisée plus économiquement, c'est-à-dire en quantité nettement moindre que l'huile d'olive vierge extra,
- être utilisée au plan technologique comme un ingrédient aromatique, c'est-à-dire à un dosage classiquement inférieur à 2 g pour 100 g de produit fini,
- être d'un goût suffisamment fin à la dose d'emploi retenue, de façon à réaliser le masquage attendu sans imposer des notes de "nez" et de "bouche" trop marquées et/ou trop segmentantes, et
- être elle-même stable et ne pas être source de rancissement oxydatif au cours de son stockage et de sa conservation.

La demanderesse a ainsi découvert expérimentalement, parmi les huiles végétales à goût non raffinées ou vierges dont elle disposait, qu'elle pouvait avantageusement mettre en oeuvre, par exemple, de l'huile de noisette vierge, éventuellement torréfiée, à des teneurs comprises entre 0,1% et 8%, mais de préférence entre 0,3% et 2%, en atteignant l'objectif de masquer les altérations de goût de la composition lipidique revendiquée. De surcroît, l'huile de noisette comprenant près de 80% d'acides gras monoinsaturés, moins de 15% d'acide linoléique et moins de 0,5% d'acide alpha-linolénique s'avère à l'usage être un substrat aromatique d'excellente stabilité physico-chimique.

L'huile de noisette vierge peut être ou non torréfiée, dans des conditions de temps et de température évitant l'apparition de saveurs de « brûlé ».

A l'usage, c'est-à-dire après des tests de conservation en cartons à l'obscurité ou encore des tests de vieillissement accéléré à la lumière, il a été prouvé que le masquage par l'huile de noisette vierge des notes sui-generis et des goûts d'altération des huiles riches en DHA et des huiles de colza raffinées est satisfaisant et confère à la composition, à des teneurs voisines de 0,3% à 2% d'huile de noisette vierge, un goût fin et délicat jugé satisfaisant par la majorité des panélistes ayant évalué la composition lipidique.

Des teneurs d'huile de noisette vierge, éventuellement torréfiée, inférieures à 0,3% masquent insuffisamment les goûts d'altération tandis que des teneurs de plus de 2% ne s'avèrent pas forcément nécessaires pour atteindre le résultat escompté, au risque de conférer à la composition un goût trop typé noisette.

Sur ces bases, la demanderesse a ensuite constaté que l'addition optionnelle d'une très faible quantité d'une seconde substance aromatique choisie parmi les huiles essentielles et/ou oléorésines et/ou extraits au CO₂ supercritique et/ou absolues pouvait utilement moduler la perception de la composition telle que définie précédemment, en particulier gommer le goût de « gras » en bouche, donner une impression de moindre viscosité et aussi conférer une discrète sensation de fraîcheur. D'abord parce que l'addition de cette très faible quantité d'une seconde substance aromatique atténue à elle seule la perception du "goût de graine grasse" des huiles végétales raffinées mises en oeuvre, particulièrement celui de l'huile de colza raffinée souvent qualifié de "goût de graine crue et verte". Ensuite parce qu'elle module agréablement la perception de l'huile végétale à goût non raffinée ou vierge en apportant une subtile note de fraîcheur.

La demanderesse a ainsi découvert expérimentalement, parmi différentes substances aromatiques à sa disposition, que les huiles essentielles d'agrumes mises en oeuvre à des doses inférieures à 0,01% mais supérieures à 0,001% conviennent pour obtenir cet effet organoleptique complémentaire.

Cependant, après avoir étudié le comportement de différentes formules de la composition lipidique revendiquée en situation de vieillissement accéléré à la lumière, la demanderesse a constaté que les compositions conservées en récipients transparents (flacons de verre, bouteilles en PET transparent) et soumises à une exposition prolongée à la lumière du jour, même en présence d'huile végétale à goût non raffinée telle que de l'huile de noisette vierge, éventuellement torréfiée, peuvent subir une dégradation organoleptique sur une durée expérimentale de plusieurs semaines. La demanderesse a en revanche constaté avec satisfaction que la conservation de la composition revendiquée dans un contenant la protégeant de la lumière permet d'améliorer significativement, la qualité organoleptique de la composition au cours de la conservation, conjointement avec la présence d'une huile végétale à goût non raffinée autre que l'huile d'olive, telle que notamment l'huile de noisette vierge.

A titre d'exemple, la conservation de la composition revendiquée dans des bouteilles opacques de PET coloré et opacifié à l'oxyde de titane convient. A fortiori la composition revendiquée se conserve également bien lorsqu'elle est conditionnée dans des récipients totalement opaques à la lumière, comme par exemple des bidons métalliques vernis intérieurement.

Dans le cadre de la présente invention, l'huile de colza utilisée peut être soit de l'huile de colza raffinée soit un mélange comprenant une part majoritaire d'huile de colza raffinée et une autre part d'huile de colza non raffinée et/ou d' huile de graines de colza grillées ou torréfiées.

La composition lipidique de la présente demande est nouvelle en ce qu'elle permet ainsi d'atteindre simultanément deux objectifs d'intérêt :
- un apport lipidique nutritionnellement amélioré caractérisé par l'introduction de DHA dans la composition, de façon préférentielle à l'EPA, conjointement avec un apport substantiel en acide alpha-linolénique, dans un rapport optimisé entre les acides gras omega 6 et omega 3, conférant à la composition revendiquée un rôle d'huile "équilibrante" pour la diète quotidienne avec un apport significatif en acides gras omega 3 précurseur (alpha-linolénique) et en son dérivé supérieur omega 3 à longue chaîne (DHA), couvrant avec deux cuillères à soupe de 10 g au moins 50% des Apports Nutritionnels Conseillés (ANC) en ces deux acides gras, et
- une stabilité organoleptique de cette composition au cours du temps par la combinaison d'une part d'une aromatisation discrète mais néanmoins capable de masquer les mauvais goûts avant ouverture, et d'autre part d'une protection contre la lumière par conservation de la composition dans des contenants opaques à la lumière du jour.

Ainsi, grâce à l'aromatisation discrète obtenue par la mise en oeuvre d'une huile végétale à goût non raffinée ou vierge, autre qu'une huile d'olive, telle que par exemple les huiles de noisette, les huiles de fruits secs grillés ou torréfiés, les huiles de graines grillées ou torréfiées, le masquage des goûts indésirables de la composition revendiquée peut être réalisé, que ces mauvais goûts proviennent du goût sui-generis des ingrédients riches en DHA et des huiles de colza ou qu'ils soient générés au cours du vieillissement de la composition dans le temps.

Le rapport en poids acide linoléique/acide alpha-linolénique varie de 2,4 à 3,9, et notamment de 2,6 à 3,9, permettant à la composition lipidique de jouer son rôle de composition équilibrante dans la diète quotidienne.

Le rapport en poids acide oléique / acide linoléique varie de 3,1 à 4,6 ce qui permet de mieux contrôler l'environnement physico-chimique des acides gras omega 3 alpha-linolénique et docosahexaénoïque et de réduire le potentiel de stress oxydant de la composition lipidique.

Le rapport en poids acide oléique / acide alpha-linolénique varie de 9 à 14 ce qui garantit un équilibre adapté entre l'acide gras monoinsaturé oléique (ω9) et l'ensemble des acides gras de la série oméga 3 de la composition lipidique, permettant ainsi d'optimiser l'environnement de ces acides gras polyinsaturés.

Le rapport en poids acide alpha-linolénique/acide docosahexaénoïque varie de 7 à 30, permettant de compléter, au sein de la famille oméga 3, l'apport en acide alpha-linolénique par une quantité suffisante de DHA, afin de compenser l'insuffisance de conversion chez l'homme de l'acide alpha-linolénique en DHA.

Le rapport en poids (acide docosahexaénoïque) / (acide eicosapentaénoïque) varie de 4 à 160 ce qui traduit l'enrichissement sélectif voulu en dérivé supérieur omega 3 à longue chaîne en C22 et six insaturations (DHA), l'apport en acide eicosapentaénoïque (EPA) n'étant pas considéré comme primordial dans la réalisation de la composition lipidique revendiquée. En effet, dans sa demande de brevet FR 2878413, la demanderesse montrait que l'administration d'une composition lipidique contenant 5 g d'acide alpha-linolénique pour 100 g de composition à des hommes adultes sains pendant 4 mois à raison de 30 g de composition par jour provoquait un enrichissement significatif en EPA des phospholipides plasmatiques.

Par ailleurs, la composition objet de la présente invention ne comprend pas d'acides gras polyinsaturés ω6 ayant un degré d'insaturation de 3 (acide gamma-linolénique ou GLA). La demanderesse ne souhaite pas en effet augmenter la balance « omega 6 / omega 3 » qu'elle cherche au contraire à réduire, notamment par l'apport d'acides gras de la série omega 3, via le précurseur alpha-linolénique et le dérivé à longue chaîne DHA.

Selon un mode de réalisation préféré, la composition lipidique de l'invention est caractérisée en ce qu'elle comprend :
- de 0,25% à 0,75%, en particulier de 0,30 à 0,65%, en particulier de 0,25 à 0,65% de DHA, en poids de la composition lipidique,
- moins de 0,10% d'EPA, en poids de la composition lipidique,
- de 0,30% à 0,85%, en particulier de 0,35 à 0,75%, en particulier de 0,30 à 0,75% de la somme des acides gras EPA et DHA, en poids de la composition lipidique.

La composition lipidique revendiquée est donc conçue pour contenir moins de 100 mg d'EPA pour 100 g de composition.

Pour le DHA en revanche, il est connu que le taux de conversion de l'EPA en DHA est réputé faible, de l'ordre du % chez l'humain, l'homme en particulier, et que les Apports Nutritionnels Conseillés pour la population française (ANC 2001) de 120 mg de DHA par jour chez l'homme adulte, de 100 mg chez la femme adulte, de 250 mg chez la femme enceinte ou allaitante, de 100 mg chez le sujet âgé ne sont pas atteints chez toutes les personnes.

La teneur en DHA de la composition lipidique objet de l'invention s'élève donc de 250 mg à 750 mg, en particulier de 250 mg à 650 mg de DHA pour 100 g de composition. Deux cuillères à soupe de 10 g de la composition revendiquée apportent ainsi avantageusement entre 50% et 125%, en particulier entre 50% et 100% des apports quotidiens conseillés.

Enfin la teneur totale en EPA et DHA se situe dans une plage allant de 300 mg à 850 mg, en particulier de 300 mg à 750 mg d'acides gras oméga 3 pour 100 g de la composition lipidique revendiquée.

Selon un mode de réalisation préféré, la composition lipidique de l'invention est caractérisée en ce qu'elle comprend :
- de 7,0 à 8,5%, et de préférence de 7,2% à 8,3% en poids d'acides gras saturés,
- de 65 à 72%, de préférence de 66 à 71% en poids d'acides gras monoinsaturés, et
- de 20 à 27%, et de préférence de 21 à 26% en poids d'acides gras polyinsaturés.

La composition lipidique selon l'invention est également caractérisée en ce qu'elle comprend de 63 à 70%, et de préférence de 65 à 69% en poids d'acide monoinsaturé oléique (ω9).

Les huiles de colza (Canola), les huiles de tournesol à haute teneur en acide oléique (ex : Oléisol®) ou encore les huiles de colza à haute teneur en acide oléique et basse teneur en acide alpha-linolénique sont notamment les principales sources d'acide oléique de la composition revendiquée.

Par ailleurs, la composition lipidique de l'invention comprend de 15 à 19%, et de préférence de 16 à 18% en poids d'acide polyinsaturé linoléique (ω6).

Les huiles de colza, les huiles de tournesol à haute teneur en acide oléique et les huiles de colza à haute teneur en acide oléique, peu riches en acide linoléique (moins de 25% en poids), permettent de limiter l'apport en acide linoléique (omega 6) dans la composition revendiquée. Le niveau d'apport revendiqué en acide linoléique reste néanmoins indispensable puisqu'il s'agit d'un acide gras essentiel.

Selon un mode de réalisation préféré, la composition lipidique de l'invention est caractérisée en ce qu'elle comprend de 5,0 à 7,2%, en particulier de 5,0 à 7,0% et de préférence de 5,3 à 6,9% en poids d'acide polyinsaturé alpha-linolénique (omega 3).

La demanderesse a avantageusement constaté que la combinaison de moyens de masquage organoleptique et de protection physique contre la lumière permet d'obtenir des formules de ladite composition lipidique nutritionnelle dont les caractéristiques organoleptiques restent satisfaisantes au cours de son vieillissement à température ambiante avant ouverture, lorsque ladite composition comprend simultanément de 5% à 7,2%, en particulier de 5,0 à 7,0% en poids d'acide alpha-linolénique (ω3) et de 0,25% à 0,75%, en particulier de 0,25 à 0,65% en poids d'acide docosahexaénoïque (w3).

L'un des aspects nutritionnels de la présente invention est donc de proposer une composition lipidique nutritionnelle garantissant d'une part un apport important en acide alpha-linolénique (ω3) compris de 5 g à 7,2 g, en particulier de 5 g à 7 g pour 100 g de composition lipidique et d'autre part un apport significatif en acide docosahexaénoïque (ω3) (DHA) compris de 250 mg à 750 mg, en particulier de 250 mg à 650 mg pour 100 g composition lipidique, sans dépasser un maximum de 100 mg d'acide eicosapentaénoïque (ω3) EPA pour 100 g de composition, les deux acides gras omega 3 à longue chaîne EPA et DHA étant dans un rapport en poids DHA/EPA compris entre 4 et 160 et la somme de ces deux acides gras étant comprise de 300 mg à 850 mg, en particulier de 300 mg à 750 mg pour 100 g d'huile de ladite composition.

Par acide alpha-linolénique (ω3), acide gras de formule C18:3 à trois doubles liaisons non conjuguées, on entend l'acide alpha-linolénique total, comprenant majoritairement la forme isomérique "all cis" ("tout cis") et à faible teneur les formes isomériques "trans" provenant de l'opération de désodorisation sous vide à une température voisine de 200-220°C. En pratique, les désodorisations effectuées selon les bonnes pratiques de fabrication conduisent dans le cas des huiles de colza à des taux d'au moins 93% de la forme "all cis" nutritionnellement recherchée, c'est-à-dire un degré d'isomérisation de l'acide l'alpha-linolénique de l'huile de colza raffinée inférieur à 7%.

De même, par acide linoléique (ω6), acide gras de formule C18:2 à deux doubles liaisons non conjuguées, on entend l'acide linoléique total, comprenant très majoritairement la forme isomérique "all cis" ("tout cis") et à très faible teneur la forme isomérique "trans". Les bonnes pratiques de fabrication en désodorisation des huiles riches en acide linoléique conduisent à des taux d'au moins 99,5% de la forme "all cis" nutritionnellement recherchée, c'est-à-dire, un degré d'isomérisation de l'acide linoléique inférieur à 0,5%.

Enfin par acide docosahexaénoïque (ω3) ou DHA, acide gras de formule C22:6 à six doubles liaisons non conjuguées, on entend essentiellement la forme isomérique "all cis", grâce au choix d'huiles de poisson ou d'huiles de microalgues riches en DHA qui ont été élaborées avec suffisamment de soin, en particulier à la désodorisation, pour ne pas former de traces détectables d'isomères "trans". Il a été en effet montré qu'il est préférable d'éviter la consommation d'isomères « trans » de la série omega 3 a longue chaîne, aux effets possiblement adverses chez le rat par exemple pour certaines fonctions biologiques comme le mécanisme de la fonction rétinienne, où le DHA, présent en quantités significatives, joue un rôle important (Acar N. et al, Reprod. Nutr. Dev. 2006 Sep-Oct ; 46(5): 515-525).

L'apport en acide alpha-linolénique (ω3) garantit que la composition revendiquée se situe entre 5 g et 7,2 g, en particulier entre 5 g et 7 g d'acide alpha-linolénique pour 100 g de composition lipidique, contribuant ainsi à couvrir une partie importante des besoins quotidiens évalués à 2 g chez l'homme adulte, tels que définis dans les Apports Nutritionnels Conseillés pour la population française (ANC 2001). Deux cuillères à soupe de 10 g de l'huile de la composition revendiquée apportent ainsi avantageusement entre 50% et 70% des apports quotidiens conseillés.

De même, l'apport en acide docosahexaénoïque (DHA) que garantit la composition revendiquée se situe entre 250 mg et 750 mg, en particulier entre 250 mg et 650 mg d'acide docosahexaénoïque pour 100 g d'huile, contribuant ainsi à couvrir une partie importante des besoins quotidiens actuellement fixés à 120 mg chez l'homme adulte, tels que préconisés dans les Apports Nutritionnels Conseillés pour la population française (ANC 2001). Deux cuillères à soupe de 10 g de l'huile de la composition revendiquée apportent ainsi avantageusement entre 50% et 125%, en particulier entre 50% et 100% des apports quotidiens conseillés.

L'huile de colza constitue la principale source d'acide alpha-linolénique de la composition de l'invention. Elle ne peut pas être remplacée en totalité ou majoritairement par de l'huile de soja, cette dernière apportant trop d'acide linoléique (omega 6) par comparaison avec l'huile de colza et ne permettant donc pas d'atteindre les équilibres voulus entre les différentes familles d'acides gras.

Selon un mode de réalisation préféré, la composition lipidique de l'invention est caractérisée en ce que le rapport en poids entre les acides gras monoinsaturés et les acides gras polyinsaturés varie de 2,4 à 3,5, et de préférence de 2,5 à 3,3.

Ce rapport illustre l'environnement monoinsaturé de cette composition lipidique enrichie en DHA, afin d'assurer la protection de ce dernier et de lutter contre le stress oxydatif chez l'utilisateur de la composition revendiquée, conjointement avec la présence de vitamine E, sans pour autant négliger un apport minimum en acide gras essentiel linoléique compris entre 15% et 19% en poids de la composition.

Une composition lipidique avantageuse selon l'invention est caractérisée en ce que le rapport en poids entre les acides gras omega 6 et les acides gras omega 3 varie de 2,4 à 3,9, en particulier de 2,6 à 3,9 et de préférence de 2,6 à 3,3.

Le rapport en poids acide linoléique / acide alpha-linolénique (ω6/ω3) varie de 2,4 à 3,9, et notamment de 2,6 à 3,9, cette plage permettant à la composition lipidique de jouer un rôle d'huile "équilibrante" dans la diète lipidique quotidienne en apportant entre 5,0 g et 7,2 g, en particulier entre 5 g et 7 g d'acide alpha-linolénique pour 100 g de composition lipidique, mais sans apporter plus de 15 g à 19 g d'acide linoléique pour 100 g de composition lipidique. L'apport quotidien de deux cuillères à soupe de 10 g de la composition revendiquée permet de couvrir ainsi au moins 50% des ANC en acide alpha-linolénique, sans dépasser 35% des ANC en acide linoléique.

La composition lipidique de l'invention présente un rapport en poids entre l'acide oléique et le DHA qui varie de 90 à 280, et notamment de 100 250 et de préférence de 110 à 240.

Cela traduit que, contrairement à d'autres formulations proposées dans l'état de la technique, le DHA est protégé par une couverture suffisante en acides gras monoinsaturés.

Selon un mode de réalisation préféré, la composition lipidique de l'invention est caractérisée en ce qu'elle contient une teneur en vitamine E, exprimée en équivalent alpha-tocophérol (TE), comprise de 0,03% à 0,10%, en poids de la composition lipidique.

L'apport en vitamine E de la composition revendiquée est d'au moins 30 mg d'équivalent alpha-tocophérol naturel (TE) pour 100 g de composition ou encore d'au moins 45 mg d'équivalent acétate d'alpha-tocophérol (UI) pour 100 g de composition, grâce à la richesse naturelle des huiles de la composition en tocophérols et par une complémentation éventuelle en acétate de d-1-alpha-tocophérol de synthèse ou en extraits naturels riches en alpha-tocophérol. Deux cuillères à soupe de 10 g de la composition lipidique apportent ainsi avantageusement au moins 90% des AJR fixés à 10 mg (UI) de vitamine E par jour.

L'apport en vitamine E de la composition revendiquée est d'au plus 100 mg d'équivalent alpha-tocophérol naturel (TE) pour 100 g de composition ou encore d'au plus 150 mg d'équivalent acétate d'alpha-tocophérol (UI) pour 100 g de composition, grâce à la richesse naturelle des huiles de la composition en tocophérols et par une complémentation éventuelle en acétate de d-1-alpha-tocophérol de synthèse ou en extraits naturels riches en alpha-tocophérol.

La composition lipidique de l'invention est également caractérisée en ce qu'elle contient une teneur en vitamine E, exprimée en équivalent acétate d'alpha-tocophérol (UI), comprise de 10,05% à 0,15%, en poids de la composition lipidique.

Elle est également caractérisée en ce que le rapport en poids entre l'alpha-tocophérol et le gamma-tocophérol varie de 0,7 à 2,3 et de préférence de 1,2 à 2,0.

Ainsi, contrairement aux autres huiles végétales courantes prises isolément à l'état pur, la composition de l'invention présente l'originalité de contenir simultanément des quantités d'α-tocophérol et de γ-tocophérol du même ordre de grandeur.

La composition bénéficie de ce fait à la fois non seulement du pouvoir "antioxydant biologique" de l'α-tocophérol (activité vitaminique E anti-radicalaire) et du pouvoir "antioxydant technologique" reconnu au γ-tocophérol, mais aussi du possible effet complémentaire du gamma-tocophérol vis-à-vis de l'alpha-tocophérol au plan biologique (Saldden K., Saldeen Tom, Nutrition Research 25 (2005) :877-889).

Selon un mode de réalisation préféré, la composition lipidique de l'invention est caractérisée en ce que la teneur en vitamine D varie de 10 à 150 µg par kg de composition lipidique, notamment de 40 à 60 µg par kg de composition lipidique.

La teneur en vitamine D de la composition revendiquée est comprise de 10 µg à 150 µg de vitamine D par kg de composition lipidique, selon la réglementation en vigueur dans chaque pays. L'apport en vitamine D de la composition revendiquée se situe en France à un maximum règlementaire de 5 µg de vitamine D pour 100 g de composition. Deux cuillères à soupe de 10 g de la composition apportent ainsi en France 20% des besoins fixés à 5 µg de vitamine D par jour.

Une composition lipidique avantageuse selon l'invention est caractérisée en ce que la teneur en acides gras isomères trans totaux est inférieure à 0,8%, et de préférence inférieure à 0,5%, en poids de la composition lipidique.

La composition lipidique objet de l'invention contient en effet moins de 0,10 % d'isomères trans de l'acide linoléique. De même elle contient moins de 0,7% d'isomères trans de l'acide alpha-linolénique, et de préférence moins de 0,5%.

Enfin elle ne contient pas d'isomères trans de l'acide docosahexaénoïque (DHA).

De préférence, la composition lipidique selon l'invention ne continent pas d'isomères trans de l'acide docosahexaénoïque (DHA):

Selon un mode de réalisation préféré, la composition lipidique de l'invention est caractérisée en ce que le rapport en poids entre la teneur en lipides d'origine marine et/ou microalgale et la teneur en huile végétale à goût non raffinée ou vierge autre que l'huile d'olive est compris de 0,1 à 30, en particulier de 0,3 à 30, en particulier de 0,1 à 22, en particulier de 0,6 à 7, et de préférence de 0,4 à 7.

La présente invention concerne également une composition lipidique telle que définie ci-dessus, dans laquelle l'huile végétale contenant moins de 4% d'acide alpha linolénique et contenant 72% à 92% d'acide oléique est choisie parmi les huiles de tournesol à haute teneur en acide oléique, les huile de colza à haute teneur en acide oléique et basse teneur en acide alpha-linolénique, les huiles de carthame à haute teneur en acide oléique, les huiles d'arachide à haute teneur en acide oléique, les huiles de noisette, les huiles d'amande ou leurs mélanges.

Dans la composition lipidique de l'invention, l'huile de colza peut être utilement remplacée ou complémentée en petites quantités par de l'huile de lin ou de l'huile de cameline ou de l'huile de périlla ou de l'huile d'inca inchi ou de l'huile de pépins de kiwi ou leurs mélanges. Ces huiles, contenant plus de 25%, et notamment plus de 30% d'acide alpha-linolénique, permettent en effet de garantir une teneur minimale en acide alpha-linolénique de la composition revendiquée lorsque l'huile de colza en contient peu pour des raisons variétales et/ou climatiques.

La présente invention concerne également une composition lipidique telle que définie ci-dessus, dans laquelle l'huile de colza est partiellement remplacée ou complémentée par de l'huile de lin à une teneur en huile de lin comprise de 0,5% à 4%, et de préférence de 1% à 3%, en poids de la composition lipidique.

La présente invention concerne également une composition lipidique telle que définie ci-dessus, dans laquelle l'huile de colza est partiellement remplacée ou complémentée par de l'huile de périlla à une teneur en huile de périlla comprise de 0,5% à 4%, et de préférence de 1% à 3%, en poids de la composition lipidique.

La présente invention concerne également une composition lipidique telle que définie ci-dessus, dans laquelle l'huile de colza est partiellement remplacée ou complémentée par de l'huile de inca inchi à une teneur en huile de inca inchi comprise de 0,5% à 4%, et de préférence 1% à 3%, en poids de la composition lipidique.

La présente invention concerne également une composition lipidique telle que définie ci-dessus, dans laquelle l'huile de colza est partiellement remplacée ou complémentée par de l'huile de pépins de kiwi à une teneur en huile de pépins de kiwi comprise de 0,5% à 4%, et de préférence de 1% à 3%, en poids de la composition lipidique.

La présente invention concerne également une composition lipidique telle que définie ci-dessus, dans laquelle l'huile de colza est partiellement remplacée ou complémentée par de l'huile de cameline à une teneur en huile de cameline comprise de 0,5% à 9%, et de préférence de 1% à 8%, en noids de la composition lipidique.

La présente invention concerne également une composition lipidique telle que définie ci-dessus, dans laquelle la teneur naturelle en vitamine E (alpha-tocophérol) des huiles de la composition est complétée par l'ajout d'alpha-tocophérol naturel à raison de 0,004% à 0,08%, et de préférence de 0,01 % à 0,06%, en poids de la composition lipidique.

Selon un mode de réalisation avantageux, la composition lipidique de l'invention est caractérisée en ce que la teneur naturelle en vitamine E (alpha-tocophérol) des huiles de la composition est complétée par l'ajout d'acétate d'alpha-tocophérol de synthèse de 0,006% à 0,12%, et de préférence de 0,015% à 0,09%, en poids de la composition lipidique.

Selon un mode de réalisation avantageux, la composition lipidique de l'invention est caractérisée en ce que la teneur naturelle en vitamine E (alpha-tocophérol) des huiles de la composition est complétée par l'ajout d'un mélange antioxygène de tocophérols naturels à des teneurs comprises à raison de 0,01% à 0,05%, et de préférence de 0,02% à 0,04%, en poids de la composition lipidique.

Selon un mode de réalisation avantageux, la composition lipidique de l'invention est caractérisée en ce que la première substance aromatique et sapide est une huile de noisette vierge, éventuellement torréfiée, dont la teneur est comprise de 0,1% à 8%, de préférence de 0,2% à 5%, et encore de préférence de 0,3% à 2% en poids de la composition lipidique.

La présente invention concerne également une composition lipidique telle que définie ci-dessus, dans laquelle la seconde substance aromatique et sapide est une huile essentielle d'agrumes dont la teneur est comprise de 0,001% à 0,010%, en poids de la composition lipidique.

La présente invention concerne également une composition lipidique telle que définie ci-dessus, caractérisée en ce qu'elle contient des extraits naturels antioxygènes riches en composés phénoliques, notamment les extraits de romarin ou de sauge, à raison de 0,005% à 0,2% en poids de la composition lipidique.

La présente invention concerne également une composition lipidique telle que définie ci-dessus, caractérisée en ce qu'elle est supplémentée par du rétinol (vitamine A), notamment à des teneurs comprises de 5 000 à 15 000 µg de rétinol par kg.

La vitamine A s'avère en effet nécessaire dans certaines régions du monde ou chez des personnes présentant une carence plus ou moins importante en rétinol.

La composition peut ainsi contenir les trois vitamines liposolubles A, D et E.

La présente invention concerne également une composition lipidique telle que définie ci-dessus, caractérisée en ce qu'elle est supplémentée par du β-carotène (provitamine A), notamment à des teneurs comprises de 30 à 90 mg de β-carotène par kg de composition lipidique.

Le β-carotène est le précurseur de la vitamine A et c'est également une substance anti-radicalaire qui protège contre certaines pathologies en réduisant le stress oxydant:

La présente invention concerne également une composition lipidique telle que définie ci-dessus, caractérisée en ce qu'elle comprend :
- 0,05 à 0,12% d'acide gras C14:0,
- 4,2 à 4,9%, notamment 4,2 à 4,6% d'acide gras C16:0,
- 0,2 à 0,3% d'acide gras C16:1,
- 0,04 à 0,06% d'acide gras C17:0,
- 0,05 à 0,08% d'acide gras C17:1,
- 1,7 à 2,2% d'acide gras C18:0,
- 63 à 70% d'acide gras C18:1,
- 14 à 19% d'acide gras C18:2 ω6,
- 5,0 à 7,2%, notamment 5,0 à 7,0% d'acide gras C18:3 ω3,
- 0,4 à 0,6% d'acide gras C20:0,
- 0,8 à 1,5% d'acide gras C20:1,
- 0,04 à 0,11% d'acide gras C20:2,
- 0,04 à 0,09% d'acide gras C20:5 ω3 (EPA)
- 0,3 à 0,6% d'acide gras C22:0,
- 0,1 à 0,3% d'acide gras C22:1,
- 0,01 à 0,02% d'acide gras C22:5 ω3 (DPA)
- 0 à 0,13% d'acide gras C22:5 ω6 (DPA)
- 0,24 à 0,76%, notamment 0,24 à 0,66% d'acide gras C22:6 ω3 (DHA)
- 0,1 à 0,2% d'acide gras C24:0, et
- 0,07 à 0,12% d'acide gras C24:1.

Selon un mode de réalisation avantageux, la composition lipidique de l'invention comprend :
- 0,07% d'acide gras C14:0,
- 4,34% d'acide gras C16:0,
- 0,24% d'acide gras C16:1,
- 0,05% d'acide gras C17:0,
- 0,06% d'acide gras C17:1,
- 1,84% d'acide gras C18:0,
- 68,12% d'acide gras C18:1,
- 16,15% d'acide gras C18:2 ω6,
- 6,05% d'acide gras C18:3 ω3,
- 0,46% d'acide gras C20:0,
- 0,99% d'acide gras C20:1,
- 0,05% d'acide gras C20:2,
- 0,06% d'acide gras C20:5 ω3 (EPA)
- 0,42% d'acide gras C22:0,
- 0,19% d'acide gras C22:1,
- 0,01% d'acide gras C22:5 ω3 (DPA)
- 0,29% d'acide gras C22:6 ω3 (DHA)
- 0,17% d'acide gras C24:0, et
- 0,10% d'acide gras C24:1.

Selon un autre mode de réalisation avantageux, la composition lipidique de l'invention comprend :
- 63 à 77% d'huile de colza raffinée,
- 23 à 37% d'huile de tournesol à haute teneur en acide oléique,
- 0,75% à 1,15% d'huile de poisson riche en DHA,
- 0,3% à 2% d'huile de noisette vierge, éventuellement torréfiée,
- 0,02% à 0,04% de mélange de tocophérols naturels,
- 0,001% à 0,01% d'huile essentielle d'agrumes.
- 40 µg à 60 µg de vitamine D par kg de composition lipidique.

Selon un autre mode de réalisation avantageux, la composition lipidique de l'invention comprend :
- 63 à 77% d'huile de colza raffinée,
- 23 à 37% d'huile de tournesol à haute teneur en acide oléique,
- 0,70% à 0,80% d'huile microalgale riche en DHA,
- 0,3% à 2% d'huile de noisette vierge, éventuellement torréfiée,
- 0,02% à 0,04% de mélange de tocophérols naturels,
- 0,001% à 0,01% d'huile essentielle d'agrumes,
- 40 µg à 60 µg de vitamine D par kg de composition lipidique.

Selon un autre mode de réalisation avantageux, la composition lipidique de l'invention comprend :
- 70% d'huile de colza raffinée
- 28,5% d'huile de tournesol à haute teneur en acide oléique,
- 1% d'huile de poisson riche en DHA,
- 0,5% d'huile de noisette vierge, éventuellement torréfiée,
- 0,03% de mélange de tocophérols naturels,
- 0,003% d'huile essentielle d'agrumes,
- 50 µg de vitamine D par kg de composition lipidique.

Selon un autre mode de réalisation avantageux, la composition lipidique de l'invention comprend :
- 70% d'huile de colza raffinée
- 28,7% d'huile de tournesol à haute teneur en acide oléique,
- 0,8% d'huile microalgale riche en DHA,
- 0,5% d'huile de noisette vierge, éventuellement torréfiée,
- 0,03% de mélange de tocophérols naturels,
- 0,003% d'huile essentielle d'agrumes,
- 50 µg de vitamine D par kg de composition lipidique.

La présente invention concerne également l'utilisation d'une composition lipidique telle que définie ci-dessus, dans une huile végétale alimentaire, destinée à une utilisation comme huile d'assaisonnement, huile de cuisson, ou huile multi-usages.

La présente invention concerne également l'utilisation d'une des compositions lipidiques telles que définies ci-dessus dans une préparation huileuse aromatique et/ou aromatisée.

La présente invention concerne également l'utilisation d'une des compositions lipidiques telles que définies ci-dessus dans une préparation condimentaire, émulsionnée ou non, à base d'huile végétale, notamment mayonnaises, mayonnaises allégées, sauces pour salades et crudités, vinaigrettes, vinaigrettes allégées, sauces culinaires, destinées à l'assaisonnement ou à l'accompagnement des plats.

La présente invention concerne également l'utilisation d'une des compositions lipidiques telles que définies ci-dessus dans des compléments alimentaires tels que notamment des capsules ou gélules.

La présente invention concerne également l'utilisation d'une des compositions lipidiques telles que définies ci-dessus dans une composition à base de lait et/ou dérivés laitiers, notamment crèmes, laits fermentés, yoghourts, sauces, fromages et desserts lactés.

L'invention est illustrée ci-après par des exemples de compositions, de tests de laboratoire de conservations à l'obscurité et de tests de vieillissement accéléré à la lumière, enfin de réalisations à l'échelle pilote de la composition revendiquée.

L'huile de colza raffinée est prélevée dans la cuve de stockage de colza raffiné de l'usine LESIEUR de Coudekerque-Branche. Son acidité oléique est inférieure à 0,1%, son humidité inférieure à 0,07%, son alcalinité inférieure à 6 ppm, son indice de peroxydes inférieur à 1 meq/kg et sa teneur en phosphore inférieure à 5 ppm. Elle est jugée neutre de goût.

L'huile de tournesol raffinée à haute teneur en acide oléique (Oléisol®) est prélevée dans la cuve de stockage d' Oléisol® raffiné de l'usine LESIEUR de Coudekerque-Branche. Son acidité oléique est inférieure à 0,1%, son humidité inférieure à 0,07%, son alcalinité inférieure à 6 ppm, son indice de peroxydes inférieur à 1 meq/kg et sa teneur en phosphore inférieure à 5 ppm. Elle est jugée neutre de goût.

L'huile de colza raffinée à haute teneur en acide oléique et basse teneur en acide oléique provient de l'atelier de raffinage de l'ITERG (F-Pessac).

L'huile de lin est une huile de pression à froid alimentaire du commerce, non raffinée, et de bonne qualité organoleptique.

L'huile de cameline est une huile vierge alimentaire du commerce et de bonne qualité organoleptique.

L'huile de noisette vierge, éventuellement torréfiée, d'origine française, contient environ 80% d'acide oléique, 11% d'acide linoléique et moins de 2% d'acide alpha-linolénique.

Les compositions obtenues ont été conditionnées en bouteilles pour servir aux différents tests (tests de vieillissement accéléré à la lumière ou tests de conservation de type commerciale en cartons) :
- soit dans des bouteilles de PET transparentes de contenance 0,75 litre bouchées manuellement avec des bouchons industriels en PEBD (polyéthylène basse densité),
- soit dans des bouteilles de PET vert opacifié de contenance 1 litre bouchées manuellement avec des bouchons industriels en PEBD,
- soit dans des flacons de verre transparents de contenance 60 ml bouchés manuellement avec des bouchons de laboratoire en polypropylène.

Dans les tableaux de composition récapitulatifs illustrant les exemples, on a indiqué :
- la composition en % des principaux acides gras des compositions lipidiques
- la composition en % et la teneur en tocophérols de ces compositions.

Ont été également consignées les valeurs relatives aux revendications 1 à 14, rapportées pour 100 g de composition lipidique ou par cuillère à soupe de 10 g de composition.

Les abréviations ont les significations suivantes :
**CAS :** cuillère à soupe de 10 g de composition lipidique
**OL :** acide oléique (ω9)
**LA :** acide linoléique (ω6)
**ALA :** acide alpha-linolénique (ω3)
**EPA :** acide eicosapentaénoïque
**DHA :** acide docosahexaénoïque
**ANC** : apport nutritionnel conseillé (Apports Nutritionnels Conseillés pour la population française -ANC 2001 - 3e édition - Editions Tec & Doc).

On rappelle les apports quotidiens recommandés pour l'homme adulte :

| | |
|---|---|
| Acide linoléique : | 10 g/j (ANC) |
| Acide alpha-linolénique : | 2 g/j (ANC) |
| DHA : | 120 mg/j (ANC) |
| α-tocophérol (UI) | 10 mg/j (AJR) |

### Exemple 1 : Essais laboratoire avec test de vieillissement accéléré à la lumière

Pour étudier au cours du temps l'effet combiné de l'huile de noisette non raffinée et de l'opacité du contenant sur la qualité organoleptique des compositions lipidiques nutritionnelles de l'invention au cours de leur conservation, des formules de la composition lipidique ont été préparées par quantités de 10 kg sur la base d'un mélange huileux contenant 75% en poids d'huile de colza raffinée et entre 23% et 25% d'huile de tournesol à haute teneur en acide oléique (Oléisol®), avec ajustement à 100% de la formule en fonction de la teneur des autres ingrédients.

L'huile de colza raffinée (Lesieur) contient 61,1% d'acide oléique, 20,2% d'acide linoléique et 8,6% d'acide alpha-linolénique. L'huile Oléisol® (Lesieur) contient 85,5% d'acide oléique, 6,0% d'acide linoléique et moins de 0,5% d'acide alpha-linolénique. L'huile de noisette vierge, éventuellement torréfiée, est d'origine française.

La première huile de poisson riche en DHA provient de la Société Lipid Nutrition (Wormerveer, Pays-Bas) sous la référence « Marinol ™ D-40 » et contient environ 36% de DHA et 6% d'EPA.

La seconde huile de poisson riche en DHA provient de la Société DSM Nutritional Products Europe Ltd (Basel, Suisse) sous la référence « Ropufa ® '30' n-3 INF oil» et contient environ 27% de DHA et 6% d'EPA.

L'huile algale riche en DHA provient de la Société Nutrinova (Frankfurt-am-Main, Allemagne) sous la référence « Nutrinova ® DHA CL » et contient environ 43% de DHA et 0,4% d'EPA.

L'huile de poisson et l'huile algale riche en DHA ont été dosées de façon à atteindre une teneur en DHA de 0,24% à 0,30% dans la composition finale.

Les différentes formules préparées ont été réalisées par quantités de 10kg par mélange des différents ingrédients pré-pesés dans un seau inox de 15 litres, avec une agitation modérée (sans création de vortex) à 600 t/mn pendant 20 minutes, à l'aide d'un agitateur électrique à pales type Turbotest Rayneri (Société VMI, Montaigu, France), évitant ainsi l'aération préjudiciable de la composition.

| | | |
|---|---|---|
| Témoin T0 | huile de colza | 7 500 g |
| | huile Oléisol® | 2 500 g |
| | | |
| Témoin T1 : | huile de colza | 7 500 g |
| | huile Oléisol® | 2 450 g |
| | huile de noisette vierge | 50 g |
| | | |
| Formule A0 | huile de colza | 7 500 g |
| | huile Oléisol® | 2 425 g |
| | huile Nutrinova®DHA-CL | 75 g |
| | | |
| FormuleA1 : | huile de colza | 7 500 g |
| | huile Oléisol® | 2 375 g |
| | huile Nutrinova®DHA-CL | 75 g |
| | huile de noisette vierge | 50 g |
| | | |
| Formule R0 : | huile de colza | 7 500 g |
| | huile Oléisol® | 2 380 g |
| | huile Ropufa®'30'n-3 INF oil | 120 g |
| | | |
| Formule R1 : | huile de colza | 7 500 g |
| | huile Oléisol® | 2 330 g |
| | huile Ropufa®'30'n-3 INF oil | 120 g |
| | huile de noisette vierge | 50 g |
| | | |
| Formule M0 | huile de colza | 7 500 g |
| | huile Oléisol® | 2 425 g |
| | huile Marinol™ D-40 | 75 g |
| | | |
| Formule M1 : | huile de colza | 7 500 g |
| | huile Oléisol® | 2 375 g |
| | huile Marinol™ D-40 | 75 g |
| | huile de noisette vierge | 50 g |

Chaque formule a ensuite été conditionnée en bouteilles de PET vert opaque de contenance 1 litre, bouchées manuellement avec des bouchons industriels, avec un espace de tête résiduel d'environ 15 ml, puis conservées dans différentes conditions de stockage :
- à l'obscurité en chambre froide à 4°C (témoins pour les différents essais)
- à la lumière naturelle du jour en intérieur, diffuse et modérément intense à température ambiante, c'est-à-dire avec un ensoleillement partiel dans une salle de laboratoire orientée à l'ouest recevant au moins 300 lux, pendant 8 semaines.

De telles conditions d'exposition montrent en général une bonne corrélation entre ce test et celui de vieillissement organoleptique naturel en cartons (obscurité) jusqu'à la date d'utilisation optimale, également avec une exposition à la lumière artificielle atténuée d'une étagère commerciale.

Les produits soumis à ce test de vieillissement accéléré à la lumière ont donc été observés après 8 semaines d'exposition à ces conditions. L'évaluation sensorielle des compositions lipidiques a été effectuée par un panel de 7 à 8 personnes pratiquant fréquemment l'évaluation sensorielle des huiles végétales, avec l'échelle de notation sur 10 suivante :

| | |
|---|---|
| 7,5 et plus de 7,5 | : satisfaisant, sans aucun défaut |
| 7,1 à 7,4 | : correct, avec de très légers défauts non gênants |
| 7,0 | : limite acceptable |
| 6,5 à 6,9 | : non satisfaisant, avec défauts marqués non rédhibitoires |
| 6,0 à 6,4 | : médiocre |
| moins de 6,0 | : rédhibitoire, franchement mauvais, écoeurant |

Pour chaque formule avec ou sans huile de noisette vierge, le tableau 1 ci-dessous reprend les principaux résultats d'évaluation sensorielle avec :
- la moyenne des notes et le nombre de panélistes ayant mis une note inférieure à la limite acceptable de 7,0 ;
- le nombre de remarques sur les deux principaux défauts observables (P= goût de poisson, R= goût de rance).

Ces essais montrent que la combinaison d'une petite quantité d'une huile végétale non raffinée comme l'huile de noisette vierge, éventuellement torréfiée, et d'un emballage opaque protégeant de la lumière permet aux compositions nutritionnelles objet de l'invention de conserver des notes organoleptiques correctes ou satisfaisantes après un test de vieillissement accéléré de 8 semaines à la lumière naturelle du jour, à température ambiante.

Ce test montre aussi que sans la présence d'une huile végétale non raffinée, telle que notamment l'huile de noisette vierge, éventuellement torréfiée, les formules de la composition lipidique contenant des huiles riches en DHA, que celles-ci proviennent de poissons ou de microalgues, résistent moins bien ou mal au test de vieillissement, avec des notes de poisson et/ou de rance, en particulier si ces huiles riches en DHA possédaient dès le départ un goût sui-generis de poisson.

**TABLEAU 1**

| **TEST DE VIEILLISSEMENT ACCELERE A LA LUMIERE** | |
|---|---|
| **Sans huile de noisette vierge** | **Avec huile de noisette vierge** |
| **Témoin T0 avant le test** | **Témoin T1 avant le test** |
| Moyenne : **7,6** notes <7,0 : 1/8 | Moyenne: **7,4** notes <7,0 : 1/8 |
| Remarques: 1P, 0R | Remarques : 0P, 1R |

| **Témoin T0 après vieillissement** | **Témoin T1 après vieillissement** |
|---|---|
| Moyenne : **7,0** notes <7,0 : 3/8 | Moyenne : **7,6** notes <7,0 : 0/8 |
| Remarques : 2P, 2R | Remarques : 0P, 0R |

| **Formule A0 après vieillissement** | **Formule A1 après vieillissement** |
|---|---|
| Moyenne : **6,3** notes <7,0 : 8/8 | Moyenne : **7,0** notes <7,0 : 4/8 |
| Remarques : 6P, 2R | Remarques : 2P, 1R |

| **Formule M0 après vieillissement** | **Formule M1 après vieillissement** |
|---|---|
| Moyenne : **7,0** notes <7,0 : 3/8 | Moyenne : **7,7** notes <7,0 : 0/8 |
| Remarques : 3P, 0R | Remarques : 0P, 0R |

| **Formule R0 après vieillissement** | **Formule R1 après vieillissement** |
|---|---|
| Moyenne : **6,0** notes <7,0 : 8/8 | Moyenne : **7,3** notes <7,0 : 3/8 |
| Remarques : 4P, 3R | Remarques : 2P, 1R |

La composition chromatographique des acides gras des différentes formules étudiées figure dans les tableaux 1.1 à 1.4.

**TABLEAU 1.1**

| **ANALYSE DE LA COMPOSITION EN ACIDES GRAS DES ESSAIS LABORATOIRE** | | | |
|---|---|---|---|
| | | | **Préparation Labo T0 (témoin) 10 kg** |
| **Acides** | | | |
| Myristique | C14 : 0 | | 0,04 |
| Myristoléique | C14 : 1 | | |
| Palmitique | C16 : 0 | | 4,33 |
| Palmitoléique | C16 : 1 | | 0,19 |
| Heptadecanoïque | C17 : 0 | | 0,04 |
| Heptadecenoïque | C17 : 1 | | 0,06 |
| Stéarique | C18 : 0 | | 1,84 |
| Oléique | C 18 : 1 | Trans | |
| | | Cis | 67,15 |
| Linoléique | C18 : 2 | Trans | 0,08 |
| | | Cis | 16,54 |
| **Alpha-linolénique** | C18 : 3 | Trans | **0,37** |
| | | Cis | **6,43** |
| Arachidique | C20 : 0 | | 0,45 |
| Gadoléique | C20 : 1 | | 0,94 |
| Eicosadienoïque | C20 : 2 | | 0,05 |
| **Eicosapentaénoïque** | C20 : 5 | | **0** |
| Béhénique | C22 : 0 | | 0,40 |
| Erucique | C22 : 1 | | 0,22 |
| **Docosahexaénoïque** | C22 : 6 | | **0** |
| Lignocérique | C24 : 0 | | 0,14 |
| Sélacholéique | C24 : 1 | | 0,10 |
| Non identifiés | | | 0,63 |

| **ANALYSE DE LA TENEUR EN TOCOPHEROLS DES ESSAIS LABORATOIRE** | | | |
|---|---|---|---|
| Tocophérols totaux (mg/100 g) | | | 63,8 |
| α-tocophérol (%) | | | 53,5 |
| β-tocophérol (%) | | | 0,8 |
| γ-tocophérol (%) | | | 44,8 |
| δ-tocophérol (%) | | | 0,9 |

**TABLEAU 1.2**

| **ANALYSE DE LA COMPOSITION EN ACIDES GRAS DES ESSAIS LABORATOIRE** | | | |
|---|---|---|---|
| | | | **Préparation Labo M0 (marinol™ D-40) 10 kg** |
| **Acides** | | | |
| Myristique | C14 : 0 | | 0,06 |
| Myristoléique | C14 : 1 | | |
| Palmitique | C16 : 0 | | 4,38 |
| Palmitoléique | C16 : 1 | | 0,22 |
| Heptadecanoïque | C17 : 0 | | 0,05 |
| Heptadecenoïque | C17 : 1 | | 0,06 |
| Stéarique | C18 : 0 | | 1,86 |
| Oléique | C18 : 1 | Trans | |
| | | Cis | 66,80 |
| Linoléique | C18 : 2 | Trans | 0,08 |
| | | Cis | 16,47 |
| **Alpha-linolénique** | C18 : 3 | Trans | 0,37 |
| | | Cis | **6,40** |
| Arachidique | C20 : 0 | | 0,45 |
| Gadoléique | C20 : 1 | | 0,95 |
| Eicosadienoique | C20 : 2 | | 0,05 |
| **Eicosapentaénoïque** | C20 : 5 | | **0,04** |
| Béhénique | C22 : 0 | | 0,40 |
| Erucique | C22 : 1 | | 0,22 |
| **Docosahexaénoïque** | C22 : 6 | | **0,24** |
| Lignocérique | C24 : 0 | | 0,14 |
| Selacholéique | C24 : 1 | | 0,10 |
| Non identifiés | | | 0,66 |

| **ANALYSE DE LA TENEUR EN TOCOPHEROLS DES ESSAIS LABORATOIRE** | | | |
|---|---|---|---|
| Tocophérols totaux (mg/100 g) | | | 67,5 |
| α-tocophérol (%) | | | 52,5 |
| β-tocophérol (%) | | | 0,8 |
| γ-tocophérol (%) | | | 45,4 |
| δ-tocophérol (%) | | | 1,3 |

**TABLEAU 1.3**

| **ANALYSE DE LA COMPOSITION EN ACIDES GRAS DES ESSAIS LABORATOIRE** | | | |
|---|---|---|---|
| | | | **Préparation Labo R0 (Ropufa® '30' n-3 INF oil)** |
| **Acides** | | | |
| | | | **10 kg** |
| Myristique | C14 : 0 | | 0,08 |
| Myristoleique | C14 : 1 | | |
| Palmitique | C16 : 0 | | 4,50 |
| Palmitoléique | C16 : 1 | | 0,25 |
| Heptadecanoïque | C17 : 0 | | 0,06 |
| Heptadecenoïque | C17 : 1 | | 0,07 |
| Steanque | C18 : 0 | | 1,89 |
| Oléique | C18 : 1 | Trans | |
| | | Cis | 66,59 |
| Linoléique | C18 : 2 | Trans | 0,08 |
| | | Cis | 16,3 |
| **Alpha-linolénique** | C18 : 3 | Trans | **0,36** |
| | | Cis | **6,36** |
| Arachidique | C20 : 0 | | 0,45 |
| Gadoléique | C20 : 1 | | 0,95 |
| Eicosadienoïque | C20 : 2 | | 0,05 |
| **Eicosapentaénoïque** | C20 : 5 | | **0,05** |
| Béhénique | C22 : 0 | | 0,41 |
| Erucique | C22 : 1 | | 0,22 |
| **Docosahexaénoïque** | C22 : 6 | | **0,28** |
| Lignocérique | C24 : 0 | | 0,15 |
| Sélacholéique | C24 : 1 | | 0,10 |
| Non identifiés | | | 0,80 |

| **ANALYSE DE LA TENEUR EN TOCOPHEROLS DES ESSAIS LABORATOIRE** | | | |
|---|---|---|---|
| Tocophérols totaux (mg/100 g) | | | 66,4 |
| α-tocophérol (%) | | | 56,1 |
| β-tocopherol (%) | | | 0,7 |
| γ-tocophérol (%) | | | 42,3 |
| δ-tocophérol (%) | | | 0,9 |

**TABLEAU 1.4**

| **ANALYSE DE LA COMPOSITION EN ACIDES GRAS DES ESSAIS LABORATOIRE** | | | |
|---|---|---|---|
| | | | **Préparation Labo A0 (Nutrinova® DHA-CL)** |
| **Acides** | | | **10 kg** |
| Myristique | C14 : 0 | | 0,06 |
| Myristoléique | C14 : 1 | | |
| Palmitique | C16 : 0 | | 4,53 |
| Palmitoléique | C16 : 1 | | 0,19 |
| Heptadecanoïque | C17 : 0 | | 0,05 |
| Heptadecenoïque | C17 : 1 | | 0,06 |
| Stéarique | C18 : 0 | | 1,84 |
| Oleique | C18 : 1 | Trans | |
| | | Cis | 66,73 |
| Linoléique | C18 : 2 | Trans | 0,10 |
| | | Cis | 16,44 |
| **Alpha-linolénique** | C18 : 3 | Trans | **0,37** |
| | | Cis | **6,41** |
| Arachidique | C20 : 0 | | 0,44 |
| Gadoléique | C20 : 1 | | 0,94 |
| Eicosadienoïque | C20 : 2 | | 0,04 |
| **Eicosapentaénoïque** | C20 : 5 | | **<0,05** |
| Béhénique | C22 : 0 | | 0,40 |
| Erucique | C22 : 1 | | 0,22 |
| **Docosahexaénoïque** | C22 : 6 | | **0,27** |
| Lignocérique | C24 : 0 | | 0,14 |
| Sélacholéique | C24 : 1 | | 0,10 |
| Non identifiés | | | 0,67 |

| **ANALYSE DE LA TENEUR EN TOCOPHEROLS DES ESSAIS LABORATOIRE** | | | |
|---|---|---|---|
| Tocophérolstotaux (mg/100 g) | | | 64,5 |
| α-tocophérol (%) | | | 53,6 |
| β-tocophérol (%) | | | 0,7 |
| γ-tocophérol (%) | | | 44,4 |
| δ-tocophérol (%) | | | 1,3 |

### Exemple 2 : Essais laboratoire avec test de vieillissement accéléré à la lumière

Différentes formules de la composition lipidique ont été préparées par quantités de 1500 g sur la base d'un mélange huileux contenant 890 g d'huile de colza raffinée (soit 59,3% d'huile de colza) et entre 540 à 590 g d'huile de tournesol à haute teneur en acide oléique (Oléisol®) (soit 36 à 39% avec ajustement à 100% de la formule en fonction de la teneur des autres ingrédients).

L'objectif est d'étudier l'effet des différents ingrédients sur la qualité organoleptique des compositions lipidiques.

L'huile de colza raffinée (Lesieur) contient 61,6% d'acide oléique, 20% d'acide linoléique et 8,7% d'acide alpha-linolénique. L'huile Oléisol® (Lesieur) contient 81,7% d'acide oléique, 9,3% d'acide linoléique et moins de 0,5% d'acide alpha-linolénique. L'huile de noisette vierge, éventuellement torréfiée, d'origine française, contient 80% d'acide oléique, 11% d'acide linoléique et moins de 0,5% d'acide alpha-linolénique. L'huile de poisson riche en DHA provient de la Société Lipid Nutrition (Wormerveer, Pays-Bas) sous la référence Marinol™ D-40 et contient environ 36% de DHA et 6% d'EPA.

La solution huileuse riche en tocophérols naturels à effet antioxygène (E306) provient de la Société Vitablend (Wolvega, Pays-Bas) sous la référence Tocoblend™ L50 IP et contient environ 50% de mélange de tocophérols naturels (majoritairement du gamma-tocophérol) et 50% d'huile de tournesol. L'huile essentielle d'agrumes provient de la Société René Laurent SAS (Le Cannet-France).

L'huile de noisette et l'huile de poisson riche en DHA ont été mises en oeuvre telles quelles, tandis que la solution riche en tocophérols naturels et l'huile essentielle d'agrumes ont fait l'objet d'une pré-dilution sous forme d'une solution mère à 1% en poids dans de l'huile Oléisol®. L'huile de poisson riche en DHA a été dosée à raison de 0,9% en poids, soit 13,5 g par 1500 g de composition, afin d'atteindre une teneur en DHA de 0,3% dans la composition finale.

Les neuf différentes formules préparées ont été réalisées par mélange des différents ingrédients pré-pesés dans un récipient de 5 litres, avec agitation modérée, sans création de vortex, à 500 t/mn pendant 20 minutes, à l'aide d'un agitateur électrique à pales type Turbotest Rayneri (Société VMI, Montaigu, France), évitant ainsi l'aération préjudiciable de la composition.

| | | |
|---|---|---|
| Témoin T : | huile de colza | 900 g |
| | huile Oléisol® | 600 g |
| | | |
| Formule M : | huile de colza | 900 g |
| | huile Oléisol® | 587g |
| | huile Marinol™ D-40 | 13,5 g |
| | | |
| Formule N : | huile de colza | 890 g |
| | huile Oléisol® | 589 g |
| | huile Marinol™ D-40 | 13,5 g |
| | huile de noisette vierge | 7,5 g |
| | | |
| Formule C : | huile de colza | 890 g |
| | huile Oléisol® | 593 g |
| | huile Marinol™ D-40 | 13,5 g |
| | soln d'agrumes @ 1% | 4 g |
| | | |
| Formule V : | huile de colza | 890 g |
| | huile Oléisol® | 552 g |
| | huile Marinol™ D-40 | 13,5 g |
| | soln Tocoblend™ @ 1% | 45 g |
| | | |
| Formule CV : | huile de colza | 890 g |
| | huile Oléisol® | 548 g |
| | huile Marinol™ D-40 | 13,5 g |
| | soln Tocoblend™ @ 1% | 45 g |
| | soln d'agrumes @ 1% | 4 g |
| | | |
| Formule CN : | huile de colza | 890 g |
| | huile Oléisol® | 585 g |
| | huile Marinol™ D-40 | 13,5 g |
| | huile de noisette vierge | 7,5 g |
| | soln d'agrumes @ 1 % | 4 g |
| | | |
| Formule VN : | huile de colza | 890 g |
| | huile Oléisol® | 544 g |
| | huile Marinol™ D-40 | 13,5 g |
| | huile de noisette vierge | 7,5 g |
| | soln Tocoblend™ @ 1 % | 45 g |
| | | |
| Formule CVN : | huile de colza | 890 g |
| | huile Oléisol® | 540 g |
| | huile Marinol™ D-40 | 13,5 g |
| | huile de noisette vierge | 7,5 g |
| | soln Tocoblend™ @ 1% | 45 g |
| | soln d'agrumes @ 1 % | 4 g |

Chaque formule a ensuite été versée dans des flacons de verre de 60 ml (50 g d'huile) bouchés puis conservés dans différentes conditions de stockage :
- à l'obscurité en chambre froide à 4°C (témoins pour les différents essais) ;
- à la lumière naturelle du jour en intérieur, diffuse et modérément intense, dans une salle de laboratoire orientée à l'ouest, recevant au moins 300 lux, à température ambiante ;
- à l'obscurité à l'étuve à 32°C ;
- à l'obscurité dans des cartons fermés à température ambiante.

Les produits ont été dégustés avec la même échelle de notation sur 10 que dans l'exemple précédent :

| | |
|---|---|
| 7,5 et plus de 7,5 | : satisfaisant, sans aucun défaut |
| 7,1 à 7,4 | : correct, avec de très légers défauts non gênants |
| 7,0 | : limite acceptable |
| 6,5 à 6,9 | : non satisfaisant, avec défauts marqués non rédhibitoires |
| 6,0 à 6,4 | : médiocre |
| moins de 6,0 | : rédhibitoire, franchement mauvais , écoeurant. |

Les produits conservés à 4°C à l'obscurité ont été observés après 4 semaines d'exposition à ces conditions.

Les produits soumis au vieillissement accéléré à l'étuve à 32°C à l'obscurité ont été observés après 4 semaines d'exposition à ces conditions.

Les produits soumis au vieillissement accéléré à la lumière naturelle du jour en intérieur et à température ambiante ont été observés après 5 semaines d'exposition à ces conditions.

Les produits conservés à 4°C pendant 4 semaines ont été dégustés comparativement entre eux. Leur notations sont toutes satisfaisantes sans défauts gênants (notes entre 7,1 et 7,7/10). Au plan qualitatif :
Le témoin T présente un léger goût de « vert-haricot/graine crue », sans goût de poisson.
L'essai M a également un léger goût de« vert-haricot/graine crue », sans goût de poisson.
L'essai N a un léger goût de noisette, et on a noté l'absence de goût de« vert-haricot/graine crue » et de poisson.
L'essai C a un léger goût genre citron, et on a noté l'absence de goût de« vert-haricot/graine crue » et de poisson.
L'essai V a un léger goût de« vert-haricot/graine crue », mais pas de poisson.
L'essai CV a un léger goût de« vert-haricot/graine crue » un peu atténué, et pas de goût de poisson.
L'essai CN a un léger goût de noisette, un rien atténué par la présence du goût genre citron, et on a noté l'absence de goût de« vert-haricot/graine crue » et de poisson.
L'essai VN a un léger goût de noisette, et on a noté l'absence de goût de« vert-haricot/graine crue » et de poisson.
L'essai CVN a un léger goût de noisette, un rien atténué, et on a noté l'absence de goût de« vert-haricot/graine crue » et de poisson.

Les produits conservés à l'étuve à 32°C à l'obscurité pendant 4 semaines ont été dégustés comparativement entre eux, après retour à la température ambiante. Leur notations sont plus ou moins satisfaisantes selon les formules (entre 6,7 et 7,4 /10) :
Le témoin T présente un léger goût de « vert-haricot/graine crue », sans goût de poisson, avec une note de 7,3 correcte.
L'essai M a également un léger goût de« vert-haricot/graine crue » et en plus un léger goût de poisson, avec une note de 6,7 non satisfaisante puisque inférieure au seuil limite de 7,0.
L'essai N a un léger goût de noisette agréable, et on a noté l'absence de mauvais goût, avec une note de 7,4 correcte.
L'essai C a un léger goût genre citron, et une légère note de poisson, avec une note limite de 7,0.
L'essai V a un léger goût de« vert-haricot/graine crue », et une légère note de poisson, avec une note limite de 7,0.
L'essai CV a un léger goût de« vert-haricot/graine crue », et une légère note de poisson, avec une note limite de 7,0.
L'essai CN a un léger goût de noisette, atténué par le goût genre citron, et on a noté l'absence de goût de poisson, avec une note de 7,3 correcte.
L'essai VN a un léger goût de noisette, et on a noté l'absence de goût de poisson, avec une note de 7,4 correcte.
L'essai CVN a un léger goût de noisette, un rien atténué, et on a noté l'absence de goût de poisson, avec une note de 7,3 correcte.

Les produits soumis au vieillissement accéléré à la lumière naturelle du jour intérieure telle que définie précédemment et à température ambiante ont été observés-après 5 semaines d'exposition. Leur notations sont plus ou moins satisfaisantes, voire médiocres, selon les formules (notes entre 5,3 et 7,5/10) :
Le témoin T présente un goût de « vert-haricot», genre poisson, de vieux colza, avec une note de 5,7 rédhibitoire.
L'essai M a un franc goût de poisson écoeurant, accompagné d'un goût de rance oxydatif caractéristique, avec une note de 5,3 rédhibitoire.
L'essai N a un léger goût de noisette, un peu « beurre gras », pas de mauvais goût, en particulier pas de poisson, avec une note de 7,1 correcte. La note noisette est qualifiée cependant de « vieille noisette ».
L'essai C a un léger goût genre citron puis ensuite une note de poisson, noté 6,3 médiocre.
L'essai V a une note de « vert-haricot» avec un goût léger de poisson, noté 6,1 médiocre.
L'essai CV a aussi une note de poisson, avec un arrière-goût genre citron, noté 6,3 médiocre.
L'essai CN a à peine un goût de noisette, sans le qualificatif de « vieille noisette », peu « beurre gras », légèrement genre citron en fin de bouche, sans goût de poisson, pas de mauvais goût, avec une note de 7,1 correcte.
L'essai VN a un très léger goût de noisette, un peu « beurre gras », un léger goût de « vert-haricot », sans goût de poisson, pas de mauvais goût, avec une note de 7,1 correcte.
L'essai CVN a un léger goût de noisette, sans le qualificatif de « vieille noisette », pas « beurre gras », à peine genre citron en fin de bouche, globalement assez équilibré et assez neutre, pas de mauvais goût, avec une note de 7,3 correcte.

Ces résultats montrent que l'altération organoleptique des essais a été significativement plus importante lorsque les produits ont été exposés à la lumière naturelle du jour à température ambiante que quand ils ont été conservés en étuve à 32°C à l'obscurité. D'où la nécessité de conserver la composition lipidique revendiquée dans des emballages opaques.

Les essais montrent ensuite que l'huile de noisette vierge, éventuellement torréfiée, aromatique et sapide, incorporée à des teneurs comprises autour de 0,5%, et plus généralement entre 0,3% et 2%, permet d'atténuer significativement la perception du goût de poisson et du goût d'altération des huiles entrant dans la composition lipidique.

Ils montrent enfin que l'addition optionnelle d'une petite quantité d'une seconde substance aromatique et sapide telle qu'une huile essentielle d'agrumes permet d'améliorer la perception organoleptique globale, en atténuant le goût de « graine grasse » en bouche et en réduisant l'impression de viscosité.

Le tableau ci-dessous résume les notations organoleptiques :

| **essais** | **Obscurité 4 semaines à 4°C** | **Obscurité à l'étuve 4 semaines à 32°C** | **Lumière du jour 5 semaines à T ambiante** |
|---|---|---|---|
| **T** | 7,1 à 7,7 | 7,3 | 5,7 |
| **M** | 7,1 à 7,7 | 6,7 | 5,3 |
| **N** | 7,1 à 7,7 | 7,4 | 7,1 |
| **C** | 7,1 à 7,7 | 7,0 | 6,3 |
| **V** | 7,1 à 7,7 | 7,0 | 6,0 |
| **CV** | 7,1 à 7,7 | 7,0 | 6,3 |
| **CN** | 7,1 à 7,7 | 7,3 | 7,1 |
| **VN** | 7,1 à 7,7 | 7,4 | 7,1 |
| **CVN** | 7,1 à 7,7 | 7,3 | 7,3 |

La formule CVN, caractéristique de la composition revendiquée, contient en % en poids :

| | |
|---|---|
| huile de colza | 59,33% |
| huile Oléisol® | 39,24% |
| huile Marinol™ D-40 | 0,90% |
| huile de noisette vierge | 0,50% |
| Tocoblend™ L50 IP | 0,03% |
| huile essentielle d'agrumes | 0,0027% |

La composition chromatographique des acides gras de cette formule correspond à la composition lipidique attendue, en particulier aux revendications 1 à 14 (tableaux 2 et 3).

**TABLEAU 2**

| **ANALYSE DE LA COMPOSITION EN ACIDES GRAS DE L' ESSAI LABORATOIRE** | | | |
|---|---|---|---|
| | | | **Préparation Labo formule CVN 1500 g** |
| **Acides** | | | |
| Myristique | C14 : 0 | | 0,06 |
| Myristoléique | C14 : 1 | | |
| Palmitique | C16 : 0 | | 4,30 |
| Palmitoléique | C16 : 1 | | 0,20 |
| Heptadecanoïque | C17 : 0 | | 0,04 |
| Heptadecenoïque | C17 : 1 | | 0,06 |
| Stéarique | C18 : 0 | | 2,10 |
| Oléique | C18 : 1 | Trans | |
| | | Cis | 69,21 |
| Linoléique | C18 : 2 | Trans | 0,08 |
| | | Cis | 15,61 |
| **Alpha-linolénique** | C18 : 3 | Trans | **0,34** |
| | | Cis | **5,34** |
| Arachidique | C20 : 0 | | 0,44 |
| Gadoléique | C20 : 1 | | 0,89 |
| Eicosadienoïque | C20 : 2 | | 0,04 |
| **Eicosapentaénoïque** | C20 : 5 | | **0,05** |
| Béhénique | C22 : 0 | | 0,52 |
| Erucique | C22 : 1 | | 0,18 |
| **Docosahexaénoïque** | C22 : 6 | | **0,29** |
| Lignocérique | C24 : 0 | | 0,18 |
| Sélacholéique | C24 : 1 | | 0,09 |
| Non identifiés | | | 0,40 |

| **ANALYSE DE LA TENEUR EN TOCOPHEROLS DE L' ESSAI LABORATOIRE** | | | |
|---|---|---|---|
| Tocophérols totaux (mg/100 g) | | | 89,4 |
| α-tocophérol | | | 58,4 |
| β-tocophérol(%) | | | 1,2 |
| γ-tocophérol(%) | | | 36,1 |
| δ-tocophérol(%) | | | 4,3 |

**TABLEAU 3**

| **VALEURS ET RATIOS DE L' ESSAI LABORATOIRE** | | | |
|---|---|---|---|
| **Composition en acides gras** | g pour 100 g | g par CAS | % ANC par CAS |
| Acides gras saturés | 7,6 | 0,8 | |
| Acides gras monoinsaturés | 70,6 | 7,1 | |
| Acides gras polyinsaturés | 21,0 | 2,1 | |
| Isomères trans totaux | 0,4 | 0,04 | |
| | | | |
| Acide oléique | 69,2 | 6,9 | |
| Acide linoléique | 15,6 | 1,6 | 16 |
| Acide α-linolénique | 5,3 | 0,5 | 26 |
| | | | |

| | mg pour 100 g | mg par CAS | % ANC par CAS |
|---|---|---|---|
| Acide eicosapentaénoïque EPA | 50 | 5 | |
| Acide docosahexaénoïque DHA | 290 | 29 | 24 |
| Acides EPA + DHA | 340 | 34 | |
| α-tocophérol (vitamine E) | 52 | | |
| γ-tocophérol | 32 | | |
| Vitamine E (TE) | 56 | 5,6 | 56 (AJR) |
| Vitamine E (IU) | 84 | 8,4 | 84 (AJR) |

| | µg pour 100 g | µg par CAS | % ANC |
|---|---|---|---|
| Vitamine D3 | 0 | 0 | 0 |
| | | | |
| Rapport LA/ALA | | 2,9 | |
| Rapport OL/LA | | 4,4 | |
| Rapport OL/ALA | | 13,0 | |
| Rapport DHA/EPA | | 5,8 | |
| Rapport mono/polyinsaturés | | 3,4 | |
| Rapport OL/DHA | | 239 | |
| Rapport α-tocophérol / γ-tocophérol | | 1,6 | |

### Exemple 3 : Première fabrication pilote

Une quantité de 300 kg de composition lipidique a été préparée à l'échelle pilote.

Les huiles de colza raffiné et de tournesol raffiné à haute teneur en acide oléique (Oléisol®) destinées à la composition ont été acheminées depuis les cuves de stockage de l'usine Lesieur au Laboratoire Pilote R&D Lesieur en fûts de 200 kg.

L'huile de colza raffinée contient 62% d'acide oléique, 20% d'acide linoléique et 8,2% d'acide alpha-linolénique. L'huile Oléisol® contient 85% d'acide oléique, 7% d'acide linoléique et moins de 0,5% d'acide alpha-linolénique.

L'huile de noisette vierge, d'origine française, contient 80% d'acide oléique, 11% d'acide linoléique et moins de 0,5% d'acide alpha-linolénique.

L'huile de poisson riche en DHA utilisée provient de la Société Nippon Chemical Feed CO Ltd (Hakodate, Hokkaido, Japon) sous la référence DHA-27HD et contient environ 28% de DHA et 5,9% d'EPA.

La solution huileuse riche en tocophérols naturels à effet antioxygène (E306) provient de la Société Vitablend (Wolvega, Pays-Bas) sous la référence Tocoblend™ L50 IP et contient environ 50% de mélange de tocophérols naturels (majoritairement du gamma-tocophérol) et 50% d'huile de tournesol.

L'huile essentielle d'agrumes provient de la Société René Laurent SAS (Le Cannet-France).

La solution huileuse de vitamine D contient 4500 mg de vitamine D3 par kg de solution et a été préparée par une prédilution dans de l'Oléisol® d'une solution huileuse à 1 000 000 UI de vitamine D3 de la Société DSM Nutritional Products Europe Ltd (Basel, Suisse).

La formule de la composition lipidique comprend pour 300 kg fabriqués :
72% d'huile de colza raffinée (soit 216 kg)
26,4% d'huile de tournesol à haute teneur en acide oléique (Oléisol®) (soit 79,2 kg)
1,04% d'huile de poisson riche en DHA réf DHA-27HD (soit 3,120 kg)
0,533% d'huile de noisette vierge, éventuellement torréfiée (soit 1,6 kg)
0,0293% de mélange de tocophérols naturels Tocoblend™ L50 IP (soit 88 g)
0,002% d'huile essentielle d'agrumes (soit 6 g)
0,0012% de solution à 4 500 mg de vitamine D3 par kg (soit 3,7 g).

Dans un premier temps, 216 kg d'huile de colza et 78 kg d'Oléisol® sont transférés de leurs fûts vers la cuve inox de 600 litres, en évitant toute aération intempestive des huiles. Le transfert est réalisé à l'aide d'une pompe vide-fûts "Flux" à vitesse variable (corps F430SL, moteur F417EL, Société FLUX-Geräte Gmbh, Maulbronn, Allemagne) après pesage des fûts sur un transpalette-peseur "Ravas RPW4100" à jauge de contrainte (Société Ravas Mobile Weighing, Zaltbommel, Pays-Bas).

Séparément on a préparé dans un seau inox de 10 litres le mélange des huiles de poisson riches en DHA et de noisette vierge, auquel on a rajouté les autres ingrédients mineurs (tocophérol naturel, vitamine D, huile essentielle d'agrumes). Ce mélange est agité modérément pendant 20 minutes sans formation de vortex à l'aide d'un agitateur électrique à pales Turbotest Rayneri (Sté VMI, Montaigu, France) tournant à 500 t/mn. Cette préparation huileuse de 4,82 kg a été alors versée dans le prémélange colza-Oléisol® de 294 kg et complétée après rinçage par 1,2 kg d'Oléisol®.

Le mélange dans la cuve a été rendu homogène par l'agitation modérée du mélangeur à hélice défloculeuse "Rayneri" (Société VMI, Montaigu, France) de la cuve inox de 600 litres tournant à 450 t/min pendant une durée de 30mn, sans formation de vortex. La composition lipidique obtenue a alors été transférée à l'aide d'un doseur volumétrique "Stoppil-Super" muni d'une commande manuelle (Société Stoppil SA, Marne-la-Vallée, France) dans :
- des bouteilles en PET (polyéthylène téréphtalate) transparentes de contenance 0,75 litre, bouchées manuellement avec des bouchons industriels,
- des bouteilles en PET vert opacifié de contenance 1 litre, bouchées manuellement avec des bouchons industriels.

La composition chromatographique des acides gras de la composition obtenue correspond à la composition lipidique attendue, en particulier aux revendications 1 à 14 (tableaux 4 et 5).

**TABLEAU 4**

| **ANALYSE DE LA COMPOSITION EN ACIDES GRAS DE L' ESSAI PILOTE n°1** | | | |
|---|---|---|---|
| | | | **Préparation Pilote #1 300 kg** |
| **Acides** | | | |
| Myristique | C14 : 0 | | 0,07 |
| Myristoléique | C14 : 1 | | |
| Palmitique | C16 : 0 | | 4,34 |
| Palmitoléique | C16 : 1 | | 0,24 |
| Heptadecanoique | C17 : 0 | | 0,05 |
| Heptadecenoïque | C17 : 1 | | 0,06 |
| Stéanque | C18 : 0 | | 1,84 |
| Oléique | C18 : 1 | Trans | |
| | | Cis | 68,12 |
| Linoléique | C18 : 2 | Trans | 0,10 |
| | | Cis | 16,05 |
| **Alpha-linolénique** | C18 : 3 | Trans | **0,36** |
| | | Cis | **5,69** |
| Arachidique | C20 : 0 | | 0,46 |
| Gadoléique | C20 : 1 | | 0,99 |
| Eicosadienoïque | C20 : 2 | | 0,05 |
| **Eicosapentaénoïque** | C20 : 5 | | **0,058** |
| Béhénique | C22 : 0 | | 0,42 |
| Erucique | C22 : 1 | | 0,19 |
| **Docosahexaénoïque** | C22 : 6 | | **0,29** |
| Lignocérique | C24 : 0 | | 0,17 |
| Sélacholéique | C24 : 1 | | 0,17 |
| Non identifiés | | | 0,35 |

| **ANALYSE DE LA TENEUR EN TOCOPHEROLS DE L'ESSAI PILOTE n°1** | | | |
|---|---|---|---|
| Tocophérols totaux (mg/100 g) | | | 85,1 |
| α-tocophérol (%) | | | 53,8 |
| β-tocophérol (%) | | | 0,9 |
| γ-tocophérol (%) | | | 40,7 |
| δ-tocophérol (%) | | | 4,6 |

**TABLEAU 5**

| **VALEURS ET RATIOS DE L' ESSAI PILOTE n°1** | | | |
|---|---|---|---|
| **Composition en acides gras** | g pour 100 g | g par CAS | % ANC par CAS |
| Acides gras saturés | 7,3 | 0,7 | |
| Acides gras monoinsaturés | 69,7 | 7,0 | |
| Acides gras polyinsaturés | 22,6 | 2,3 | |
| Isomères trans totaux | 0,5 | 0,05 | |
| | | | |
| Acide oléique | 68,1 | 6,8 | |
| Acide linoléique | 16,2 | 1,6 | 16 |
| Acide α-linolénique | 6,1 | 0,6 | 30 |
| | | | |

| | mg pour 100 g | mg par CAS | % ANC par CAS |
|---|---|---|---|
| Acide eicosapentaénoïque EPA | 60 | 6 | |
| Acide docosahexaénoïque DHA | 290 | 29 | 24 |
| Acides EPA + DHA | 350 | 35 | |
| α-tocophérol (vitamine E) | 46 | | |
| γ-tocophérol | 35 | | |
| Vitamine E (TE) | 50 | 5 | 50 (AJR) |
| Vitamine E (IU) | 74 | 7,4 | 74 (AJR) |

| | µg pour 100 g | µg par CAS | % ANC |
|---|---|---|---|
| Vitamine D3 | 5 | 0,5 | 10 |
| | | | |
| Rapport LA/ALA | | 2,7 | |
| Rapport OL/LA | | 4,2 | |
| Rapport OL/ALA | | 11,2 | |
| Rapport DHA/EPA | | 4,8 | |
| Rapport mono/polyinsaturés | | 3,1 | |
| Rapport OL/DHA | | 235 | |
| Rapport α-tocophérol / γ-tocophérol | | 1,3 | |

### Exemple 4 : Deuxième fabrication pilote.

Une autre quantité de 300 kg de composition lipidique a été préparée à l'échelle pilote dans les mêmes conditions que dans l'exemple précédent.

L'huile de colza raffinée contient 63% d'acide oléique, 19,5% d'acide linoléique et 7,9% d'acide alpha-linolénique. L'huile de tournesol à haute teneur en acide oléique Oléisol®, l'huile de noisette vierge, la solution huileuse riche en tocophérols naturels, la solution huileuse de vitamine D et l'huile essentielle d'agrumes mises en oeuvre ont les mêmes caractéristiques que dans les exemples précédents.

L'huile de poisson riche en DHA utilisée provient de la Société Lipid Nutrition (Wormerveer, Pays-Bas) sous la référence Marinol™ D-40 et contient environ 36% de DHA et 5,5% d'EPA.

La formule de la composition lipidique comprend pour 300 kg fabriqués :
71,67% d'huile de colza raffinée (soit 215 kg)
26,9% d'huile de tournesol à haute teneur en acide oléique (Oléisol®) (soit 80,7 kg)
0,85% d'huile de poisson riche en DHA réf Marinol™ D-40 (soit 2,55 kg)
0,52% d'huile de noisette vierge, éventuellement torréfiée (soit 1,56 kg)
0,0333% de mélange de tocophérols naturels Tocoblend™ L50 IP (soit 100 g)
0,0022% d'huile essentielle d'agrumes (soit 6,6 g)
0,0012% de solution à 4500 mg de vitamine D3 par kg (soit 3,7 g)

Dans un premier temps, 215 kg d'huile de colza et 79 kg d'Oléisol® ont été transférés des fûts vers la cuve inox de 600 litres, comme dans l'exemple précédent. Séparément on a préparé, comme dans l'exemple précédent, le mélange des huiles de poisson riches en DHA et de noisette vierge, auquel on a rajouté les autres ingrédients mineurs (tocophérols naturel, vitamine D, huile essentielle d'agrumes). Ce mélange de 4,22 kg est agité comme dans l'exemple précédent puis versé dans le prémélange colza-Oléisol® de 294 kg et complétée après rinçage par 1,7 kg d'Oléisol®. Le mélange dans la cuve est agité et la composition lipidique obtenue est alors transférée dans les bouteilles.

La composition chromatographique des acides gras de la composition obtenue correspond à la composition lipidique attendue, en particulier aux revendications 1 à 14 (tableaux 6 et 7).

**TABLEAU 6**

| **ANALYSE DE LA COMPOSITION EN ACIDES GRAS DE L' ESSAI PILOTE n°2** | | | |
|---|---|---|---|
| | | | **Préparation Pilote #2 300 kg** |
| **Acides** | | | |
| Myristique | C14 : 0 | | 0,06 |
| Myristoleique | C14 : 1 | | |
| Palmitique | C16 : 0 | | 4,22 |
| Paimitoléique | C16 : 1 | | 0,21 |
| Heptadecanoïque | C17 : 0 | | 0,04 |
| Heptadecenoïque | C17 : 1 | | 0,06 |
| Stéarique | C18 : 0 | | 1,88 |
| Oléique | C18 : 1 | Trans | |
| | | Cis | 68,88 |
| Linoléique | C18 : 2 | Trans | 0,08 |
| | | Cis | 15,69 |
| **Alpha-linolénique** | C18 : 3 | Trans | **0,34** |
| | | Cis | **5,47** |
| Arachidique | C20 : 0 | | 0,44 |
| Gadoléique | C20 : 1 | | 0,94 |
| Eicosadienoïque | C20 : 2 | | 0,04 |
| **Eicosapentaénoïque** | C20 : 5 | | 0,05 |
| Béhénique | C22 : 0 | | 0,44 |
| Erucique | C22 : 1 | | 0,17 |
| **Docosahexaénoïque** | C22 : 6 | | **0,29** |
| Lignocérique | C24 : 0 | | 0,18 |
| Sélacholéique | C24 : 1 | | 0,09 |
| Non identifiés | | | 0,44 |

| **ANALYSE DE LA TENEUR EN TOCOPHEROLS DE L'ESSAI PILOTE n°2** | | | |
|---|---|---|---|
| Tocophérols totaux(mg/100g) | | | 86,5 |
| α-tocophérol(%) | | | 53 |
| β-tocophérol(%) | | | 1 |
| γ-tocophérol(%) | | | 41 |
| δ-tocophérol(%) | | | 5 |

**TABLEAU 7**

| **VALEURS ET RATIOS DE L' ESSAI PILOTE n°2** | | | |
|---|---|---|---|
| | | | |

| **Composition en acides gras** | g pour 100 g | g par CAS | % ANC par CAS |
|---|---|---|---|
| Acides gras saturés | 7,3 | 0,7 | |
| Acides gras monoinsaturés | 70,4 | 7,0 | |
| Acides gras polyinsaturés | 21,9 | 2,2 | |
| Isomères trans totaux | 0,4 | 0,04 | |
| | | | |
| Acide oléique | 68,9 | 6,9 | |
| Acide linoléique | 15,8 | 1,6 | 16 |
| Acide α-linolénique | 5,8 | 0,6 | 30 |
| | | | |

| | mg pour 100 g | mg par CAS | % ANC par CAS |
|---|---|---|---|
| Acide eicosapentaénoïque EPA | 50 | 5 | |
| Acide docosahexaénoïque DHA | 290 | 29 | 24 |
| Acides EPA + DHA | 340 | 34 | |
| α-tocophérol (vitamine E) | 46 | | |
| γ-tocophérol | 36 | | |
| Vitamine E (TE) | 50 | 5 | 50 (AJR) |
| Vitamine E (IU) | 74 | 7,4 | 74 (AJR) |

| | µg pour 100 g | µg par CAS | % ANC |
|---|---|---|---|
| Vitamine D3 | 5 | 0,5 | 10 |
| | | | |
| Rapport LA/ALA | | 2,7 | |
| Rapport OL/LA | | 4,2 | |
| Rapport OL/ALA | | 11,9 | |
| Rapport DHA/EPA | | 5,8 | |
| Rapport mono/polyinsaturés | | 3,2 | |
| Rapport OL/DHA | | 238 | |
| Rapport α-tocophérol / γ-tocophérol | | 1,3 | |

### Exemple 5 : Essais laboratoire avec test de conservation à l'obscurité

Les neuf différentes formules préparées dans l'exemple 2, en flacons de verre de 60 ml et conservées à l'obscurité à température ambiante dans des cartons fermés, ont été évaluées sensoriellement après 6 mois de vieillissement dans ces conditions de conservation.

Les produits ont été évalués avec la même échelle de notation sur 10 que précédemment :

| | |
|---|---|
| 7,5 et plus de 7,5 | : satisfaisant, sans aucun défaut |
| 7,1 à 7,4 | : correct, avec de très légers défauts non gênants |
| 7,0 | : limite acceptable |
| 6,5 à 6,9 | : non satisfaisant, avec défauts marqués non rédhibitoires |
| 6,0 à 6,4 | : médiocre |
| moins de 6,0 | : rédhibitoire, franchement mauvais , écoeurant. |

Les observations qualitatives et les notations ont été les suivantes :
   - Essai T :: odeur neutre
   léger goût de « graine verte », aucun autre défaut, note 7,3
   - Essai M :: odeur de vert et de poisson
   goût prononcé, écoeurant et rédhibitoire de poisson, note 5,7
   - Essai V :: légère odeur de poisson
   goût de poisson non rédhibitoire mais persistant en bouche, note 6,5
   - Essai C :: odeur neutre
   léger goût de citron puis de poisson, arrière-goût citron, frais, note 6,9
   - Essai CV :: odeur neutre
   léger goût de citron puis de poisson, arrière-goût citron, frais, note 6,9
   - Essai N :: légère odeur de noisette
   léger goût de noisette un peu « gras », pas de goût de poisson, homogène sans défauts, note 7,6
   - Essai VN :: légère odeur de noisette
   léger goût de noisette un peu « gras », pas de goût de poisson, homogène sans défauts, note 7,6
   - Essai CN :: légère odeur de noisette
   très léger goût de noisette, pas d'impression de « gras », pas de goût de poisson, homogène et assez neutre, frais, sans défauts, note 7,6
   - Essai CVN :: légère odeur de noisette
   très léger goût de noisette, pas d'impression de « gras », pas de goût de poisson, homogène et assez neutre, frais, sans défauts, note 7,6

Le tableau ci-dessous résume les notations organoleptiques de cet essai de conservation pendant 6 mois à l'obscurité à température ambiante, comparativement aux résultats précédents de l'exemple 2 de conservation pendant 5 semaines à la lumière du jour à température ambiante :

| **essais** | **Obscurité 4 semaines à 4°C** | **Lumière du jour 5 semaines à T ambiante** | **Obscurité 6 mois à T ambiante** |
|---|---|---|---|
| **T** | 7,1 à 7,7 | 5,7 | 7,3 |
| **M** | 7,1 à 7,7 | 5,3 | 5,7 |
| **N** | 7,1 à 7,7 | 7,1 | 7,6 |
| **C** | 7,1 à 7,7 | 6,3 | 6,9 |
| **V** | 7,1 à 7,7 | 6,0 | 6,5 |
| **CV** | 7,1 à 7,7 | 6,3 | 6,9 |
| **CN** | 7,1 à 7,7 | 7,1 | 7,6 |
| **VN** | 7,1 à 7,7 | 7,1 | 7,6 |
| **CVN** | 7,1 à 7,7 | 7,3 | 7,5 |

On peut en tirer les enseignements suivants :
- l'essai M contenant l'huile de poisson riche en DHA n'arrive pas à atteindre une note correcte, même conservé à l'obscurité, lorsque la composition ne contient pas au moins la première substance lipidique aromatique et sapide revendiquée ;
- l'ajout du seul antioxygène à base de tocophérols naturels dans l'essai V remonte un peu la notation mais seulement au niveau 6,5 qui n'est pas correct avec un goût de poisson, bien qu'atténué, qui persiste significativement ;
- l'ajout de la seule huile essentielle d'agrumes dans l'essai C permet de remonter la note à 6,9 juste au niveau de la limite de 7,0 mais un léger goût de poisson persiste, ce qui n'est pas satisfaisant ;
- la combinaison de l'huile essentielle d'agrumes et de l'antioxygène à base de tocophérols naturels dans l'essai CV ne permet pas non plus de dépasser la limite de 7,0;
- l'ajout de la seule huile de noisette vierge dans l'essai N permet d'atteindre une note tout à fait satisfaisante de 7,6 ;
- la combinaison de l'huile de noisette vierge et de l'huile essentielle d'agrumes dans l'essai CN permet d'atteindre une note tout à fait satisfaisante de 7,6, en gommant l'impression de gras en bouche et en apportant une discrète sensation de fraîcheur ;
- la combinaison de l'huile de noisette vierge, de l'huile essentielle d'agrumes et de l'antioxygène à base de tocophérols naturels dans l'essai CVN permet d'atteindre une note tout à fait satisfaisante de 7,5, mais sans faire mieux que l'essai CN.

La comparaison de ces différents résultats permet de tirer les conclusions pratiques suivantes :
- les compositions lipidiques testées supportent mieux le couple « obscurité-temps long » que le couple « lumière-temps court », ceci pour l'ensemble des essais. Cela explique pourquoi la demanderesse revendique un emballage opaque pour conférer à la composition lipidique nutritionnelle objet de l'invention une bonne stabilité organoleptique à température ambiante pendant plusieurs mois avant ouverture ;
- la mise en oeuvre d'une première substance lipidique, aromatique et sapide, comme une huile végétale non raffinée ou vierge, autre que l'huile d'olive, permet, comme dans l'exemple cité avec de l'huile de noisette vierge, éventuellement torréfiée, dosée à moins de 1%, de parfaitement masquer le goût de poisson et d'assurer une stabilité organoleptique, correcte après exposition de 5 semaines à la lumière et satisfaisante après conservation à l'obscurité pendant une durée d'au moins 6 mois ;
- la mise en oeuvre optionnelle et simultanée d'une seconde substance aromatique et sapide permet, comme dans l'exemple cité avec de l'huile essentielle d'agrumes dosée à moins de 0,003%, de moduler la perception du goût en réduisant la perception de gras en bouche de la composition revendiquée et en lui conférant une discrète sensation de fraîcheur.

### Exemple 6 : Essais pilote avec tests de conservation à l'obscurité ou à la lumière naturelle du jour.

Dans un premier temps, les deux formules des essais pilotes décrits dans les exemples 3 et 4 ont fait l'objet d'une évaluation sensorielle après 1 mois de vieillissement à l'obscurité en bouteilles PET transparentes ou opaques, toutes conservées dans des cartons commerciaux, à température ambiante.

Les produits ont été évalués avec la même échelle de notation sur 10 que dans les exemples précédents :

| | |
|---|---|
| 7,5 et plus de 7,5 | : satisfaisant, sans aucun défaut |
| 7,1 à 7,4 | : correct, avec de très légers défauts non gênants |
| 7,0 | : limite acceptable |
| 6,5 à 6,9 | : non satisfaisant, avec défauts marqués non rédhibitoires |
| 6,0 à 6,4 | : médiocre |
| moins de 6,0 | : rédhibitoire, franchement mauvais , écoeurant. |

Les observations qualitatives et les notations ont été les suivantes :
- Essai pilote n°1 (exemple 3) :: odeur légère de noisette agréable
léger goût de noisette, absence de sensation de « graine grasse », pas de goût de poisson, pas de goût de « vert haricot/graine crue », pas de défauts,
équilibré avec un peu de fraîcheur en fin de bouche, note satisfaisante de 7,7.
- Essai pilote n°2 (exemple 4) :: odeur légère de noisette agréable
léger goût de noisette, absence de sensation de « graine grasse », pas de goût de poisson, pas de goût de « vert haricot/graine crue », pas de défauts,
équilibré avec un peu de fraîcheur en fin de bouche, note satisfaisante de 7,7.

Dans un second temps, après ce premier mois de conservation à température ambiante à l'obscurité dans des cartons commerciaux, les produits de chacun des deux essais pilote, conditionnés soit en bouteilles PET opaque vert (IL) soit en bouteilles PET transparent (0,75L), ont été mis en vieillissement :
- soit 10 mois à température ambiante dans leur carton d'origine à l'obscurité (simulation de conservation en entrepôt commercial jusqu'à la date limite d'utilisation)
- soit 10 mois à température ambiante à la lumière naturelle du jour dans les conditions précédemment décrites.

Les observations et notations d'évaluation sensorielle sont consignées dans le tableau 7bis ci-dessous.

Ces résultats montrent une bonne tenue organoleptique des produits sur une longue durée de conservation de 10 mois à l'obscurité en cartons, avec des notes correctes de 7,4 supérieures à la limite d'acceptabilité de 7,0.

Même après exposition à la lumière naturelle du jour, on obtient encore des scores corrects compris entre 7,0 et 7,4 dès lors que les produits sont conditionnés dans des bouteilles opaques,

En revanche les produits conditionnés en bouteilles transparentes ne supportent pas l'exposition à la lumière sur cette durée et prennent une note de rance avec en plus apparition d'un goût de poisson typique, avec des notes médiocres de 6,0.

Ces essais confirment les enseignements des exemples précédents et montrent que la composition lipidique objet de l'invention est apte, de par sa conception, à conserver des propriétés organoleptiques satisfaisantes en odeur et en goût lors de la conservation pendant une durée de 11 mois en emballages opaques.

**TABLEAU 7bis**

| **EVALUATION SENSORIELLE DES ESSAIS PILOTE APRES 10 MOIS DE VIEILLISSEMENT A L'OBSCURITE OU A LA LUMIERE NATURELLE DU JOUR** | |
|---|---|
| **Bouteilles PET opaque vert (1L)** | **Bouteilles PET transparent (0,75 L)** |
| **Temoin conserve 4°C obscurité** | **Témoin conserve 4°C obscurité** |
| Très légère odeur noisette | Très legere odeur noisette |
| Equilibré, très leger goût de noisette, fraîcheur citronnee très légère, pas « gras », pas de goût de poisson, pas de mauvais goûts | équilibré, très léger goût de noisette, fraîcheur citronnée très légère pas « gras », pas de goût de poisson, pas de mauvais goûts. |
| Note globale **8,0** | Note globale **8,0** |

| **1^{er} pilote (ex.3) tampérature ambiante obscurité cartons** | **1^{er} pilote (ex.3) température ambiante obscurité cartons** |
|---|---|
| Très légère odeur noisette | Très légère odeur noisette |
| Gout de noisette ecrase, légère fraîcheur citron, pas « gras », pas de goût de poisson, pas de mauvais goûts. | Goût de noisette ecrase légère fraîcheur citron, pas « gras », pas de goût de poisson, pas de mauvais goûts. |
| Note globale 7,4 | Note globale **7,4** |

| **2^{éme} pilote (ex.4) température ambiante obscurité cartons** | **2^{éme} pilote (ex.4) température ambiante obscurité cartons** |
|---|---|
| Très légère odeur noisette | Très légère odeur noisette |
| Gout de noisette écrasé, légère fraîcheur citron, pas « gras », pas de goût de poisson, pas de mauvais goûts | Gout de noisette écrasé légère fraîcheur citron, pas « gras », pas de goût de poissons, pas de mauvais goûts. |
| Note globale **7,4** | Note globale **7,4** |

| **1^{er} pilote (ex.3) température ambiante lumière du jour** | **1^{er} pilote (ex.3) température ambiante lumière du jour** |
|---|---|
| Très légère odeur noisette, un soupçon « beurré » Gout de noisette écrasé, legere fraîcheur citron, pas « gras » ni « beurre » pas de goût de poisson, pas de goût de rance | Odeur écoeurante « beurrée », de type rance Gout de rance « beurré » puis goût de poisson franc et typique, très léger goût citronné. |
| Note globale **7,4** | Note globale **6,0** |

| **2^{éme} pilote (ex.4) température ambiante lumière du jour** | **2^{éme} pilote (ex.4) température ambiante lumière du jour** |
|---|---|
| Très légère odeur noisette, un soupçon « beurre » Gout de noisette ecrasé, légère fraîcheur citron, un soupçon « écoeurant beurré vieux carton» pas de goût de poisson, pas de goût de rance | Odeur écoeurante « beurrée », de type rance avec legere odeur de poisson. |
| | Gout de rance « écoeurant beurré » puis léger goût de poisson. |
| Note globale **7,0** | Note globale **6,1** |

### Exemple 7 : Essai laboratoire avec huile de colza « LLHOR » raffinée

Dans une variante de réalisation de la composition lipidique, on a remplacé la totalité de l'huile de tournesol à haute teneur en acide oléique (Oléisol®) raffinée par une quantité égale d'une huile de colza raffinée à haute teneur en acide oléique et basse teneur en acide alpha-linolénique (code LLHOR).

La composition lipidique a été réalisée à partir :
- d'huile de colza raffinée (Lesieur) contenant 62,2% d'acide oléique, 20,2% d'acide linoléique et 8,2 % d'acide alpha-linolénique ; et
- d'huile de colza LLHOR raffinée contenant 76,6% d'acide oléique, 10,9% d'acide linoléique et 2,4% d'acide alpha-linolénique.

Pour une quantité de 1 500 g préparée comme dans l'exemple 2, on a mis en oeuvre :

| | |
|---|---|
| huile de colza raffinée : | 1 050 g (70%) |
| huile de colza LLHOR raffinée : | 425 g (28,33%) |
| huile de poisson DHA-27HD | 16,6 g (1,10%) |
| huile de noisette vierge, éventuellement torréfiée : | 8,1 g (0,54%) |
| Tocoblend™ L50 IP : | 0,3 g (0,02%) |

La composition lipidique obtenue avait un goût satisfaisant et sa composition est donnée dans les tableaux 8 et 9 suivants et correspond bien aux revendications 1 à 14.

**TABLEAU 8**

| **ANALYSE DE LA COMPOSITION EN ACIDES GRAS DE L' ESSAI « LLHOR »** | | | |
|---|---|---|---|
| | | | **Préparation Labo formule LLHOR 1500 g** |
| **Acides** | | | |
| Myristique | C14 : 0 | | 0,09 |
| Myristoléique | C14 : 1 | | |
| Palmitique | C16 : 0 | | 4,44 |
| Palmitoléique | C16 : 1 | | 0,28 |
| Heptadecanoïque | C17 : 0 | | 0,05 |
| Heptadecenoïque | C17 : 1 | | 0,08 |
| Stéarique | C18 : 0 | | 1,81 |
| Oléique | C18 : 1 | Trans | |
| | | Cis | 65,6 |
| Linoléique | C18 : 2 | Trans | 0,07 |
| | | Cis | 17,24 |
| **Alpha-linolénique** | C18:3 | Trans | **0,33** |
| | | Cis | **6,09** |
| Arachidique | C20 : 0 | | 0,59 |
| Gadoléique | C20 : 1 | | 1,22 |
| Eicosadienoïque | C20 : 2 | | 0,06 |
| **Eicosapentaénoïque** | C20 : 5 | | **0,07** |
| Béhénique | C22 : 0 | | 0,33 |
| Erucique | C22 : 1 | | 0,17 |
| **Docosahexaénoique** | C22 : 6 | | **0,31** |
| Lignocérique | C24 : 0 | | 0,13 |
| Sélacholéique | C24 : 1 | | 0,11 |
| Non identifiés | | | 0,62 |

| **ANALYSE DE LA TENEUR EN TOCOPHEROLS DE L' ESSAI « LLHOR »** | | | |
|---|---|---|---|
| Tocophérols to totaux (mg/100 g) | | | 74,6 |
| α-tocophérol (%) | | | 38,2 |
| β-tocophérol (%) | | | 0,4 |
| γ-tocophérol (%) | | | 55,9 |
| δ-tocophérol (%) | | | 5,5 |

**TABLEAU 9**

| **VALEURS ET RATIOS DE L' ESSAI « LLHOR »** | | | |
|---|---|---|---|
| **Composition en acides gras** | g pour 100 g | g par CAS | % ANC par CAS |
| Acides gras saturés | 7,5 | 0,8 | |
| Acides gras monoinsaturés | 67,5 | 6,8 | |
| Acides gras polyinsaturés | 24,2 | 2,4 | |
| Isomères trans totaux | 0,4 | 0,04 | |
| | | | |
| Acide oléique | 65,9 | 6,6 | |
| Acide linoléique | 17,3 | 1,7 | 17 |
| Acide α-linolénique | 6,4 | 0,6 | 32 |
| | | | |

| | mg pour 100 g | mg par CAS | % ANC par CAS |
|---|---|---|---|
| Acide eicosapentaénoïque EPA | 70 | 7 | |
| Acide docosahexaénoïque DHA | 310 | 31 | 26 |
| Acides EPA + DHA | 380 | 38 | |
| α-tocophérol (vitamine E) | 29 | | |
| γ-tocophérol | 42 | | |
| Vitamine E (TE) | 33 | 3,3 | 33(AJR) |
| Vitamine E (IU) | 49 | 4,9 | 49AJR) |

| | µg pour 100 g | µg par CAS | % ANC |
|---|---|---|---|
| Vitamine D3 | 0 | 0 | 0 |
| | | | |
| Rapport LA/ALA | | 2,7 | |
| Rapport OL/LA | | 3,8 | |
| Rapport OL/ALA | | 10,3 | |
| Rapport DHA/EPA | | 4,4 | |
| Rapport mono/polyinsaturés | | 2,8 | |
| Rapport OL/DHA | | 212 | |
| Rapport α-tocophérol / γ-tocophérol | | 0,7 | |

### Exemple 8 : Essai laboratoire avec ajout d'huile de cameline vierge

Dans une autre variante de réalisation de la composition lipidique, on a remplacés 3% de l'huile de tournesol à haute teneur en acide oléique par une quantité égale d'huile cameline vierge alimentaire du commerce, n'ayant pas subi d'isomérisation de l'acide alpha-linolénique. L'huile de colza mise en oeuvre a en effet une teneur en acide alpha-linolénique insuffisante (7,4%) pour garantir l'apport en acide alpha-linolénique désiré.

La composition lipidique a été réalisée à partir :
- d'huile de colza raffinée contenant 61,9% d'acide oléique, 21,4% d'acide linoléique et 7,4 % d'acide alpha-linolénique ;
- d'huile de cameline vierge du commerce contenant 17% d'acide oléique, 14,3% d'acides en C20 :1 (gadoléique et gondoïque), 21,3% d'acide linoléique et 29,8% d'acide alpha-linolénique ; et
- d'huile de tournesol à haute teneur en acide oléique (Oléisol®) contenant 81,7% d'acide oléique, 9,3% d'acide linoléique et moins de 0,5% d'acide alpha-linolénique.

Pour une quantité de 1 500 g préparée comme dans l'exemple 2, on a mis en oeuvre :

| | |
|---|---|
| huile de colza raffinée : | 1 050 g (70%) |
| huile Oléisol® raffinée: | 382,5 g (25,5%) |
| huile de cameline vierge, éventuellement torréfiée : | 45 g (3,0%) |
| huile de poisson Marinol™ D-40 : | 13,5 g (0,90%) |
| huile de noisette vierge : | 8,7 g (0,58%) |
| Tocoblend™ L50 IP : | 0,3 g (0,02%) |

La composition lipidique résultante a un goût satisfaisant, avec une bonne complémentarité des goûts de l'huile de noisette vierge et de l'huile de cameline vierge, et sa composition est donnée dans les tableaux 10 et 11 suivants et correspond bien aux revendications 1 à 14.

**TABLEAU 10**

| **ANALYSE DE LA COMPOSITION EN ACIDES GRAS DE L' ESSAI « CAMELINE »** | | | |
|---|---|---|---|
| | | | **Préparation Labo formule Cameline 1500 g** |
| **Acides** | | | |
| Myristique | C14 : 0 | | 0,06 |
| Myristoléique | C14 : 1 | | |
| Palmitique | C16 : 0 | | 4,42 |
| Palmitoléique | C16 : 1 | | 0,22 |
| Heptadecanoïque | C17 : 0 | | 0,05 |
| Heptadecenoïque | C17 : 1 | | 0,06 |
| Stéarique | C18 : 0 | | 1,94 |
| Oléique | C18 : 1 | Trans | |
| | | Cis | 64,95 |
| Linoléique | C18 : 2 | Trans | 0,09 |
| | | Cis | 18,1 |
| **Alpha-linolénique** | C18 : 3 | Trans | **0,32** |
| | | Cis | **5,89** |
| Arachidique | C20 : 0 | | 0,50 |
| Gadoléique | C20 : 1 | | 1,44 |
| Eicosadienoïque | C20 : 2 | | 0,10 |
| **Eicosapentaénoïque** | C20 : 5 | | **0,06** |
| Béhénique | C22 : 0 | | 0,44 |
| Erucique | C22 : 1 | | 0,31 |
| **Docosahexaénoïque** | C22 : 6 | | 0,33 |
| Lignocérique | C24 : 0 | | 0,13 |
| Sélacholéique | C24 : 1 | | 0,11 |
| Non identifiés | | | 0,48 |

| **ANALYSE DE LA TENEUR EN TOCOPHEROLS DE L' ESSAI « CAMELINE»** | | | |
|---|---|---|---|
| Tocophérols totaux (mg/100 g) | | | 79,4 |
| α-tocophérol (%) | | | 51,3 |
| β-tocophérol (%) | | | 1,0 |
| γ-tocophérol (%) | | | 43,1 |
| δ-tocophérol (%) | | | 4,6 |

**TABLEAU 11**

| **VALEURS ET RATIOS DE L' ESSAI « CAMELINE »** | | | |
|---|---|---|---|
| **Composition en acides gras** | g pour 100 g | g par CAS | % ANC par CAS |
| Acides gras saturés | 7,6 | 0,8 | |
| Acides gras monoinsaturés | 67,2 | 6,7 | |
| Acides gras polyinsaturés | 24,9 | 2,5 | |
| Isomères trans totaux | 0,4 | 0,04 | |
| | | | |
| Acide oléique | 65,0 | 6,5 | |
| Acide linoléique | 18,2 | 1,8 | 18 |
| Acide α-linolénique | 6,2 | 0,6 | 31 |
| | | | |

| | mg pour 100 g | mg par CAS | % ANC par CAS |
|---|---|---|---|
| Acide eicosapentaénoïque EPA | 60 | 6 | |
| Acide docosahexaénoïque DHA | 330 | 33 | 28 |
| Acides EPA + DHA | 390 | 39 | |
| α-tocophérol (vitamine E) | 41 | | |
| γ-tocophérol | 34 | | |
| Vitamine E (TE) | 45 | 4,5 | 45 (AJR), |
| Vitamine E (IU) | 67 | 6,7 | 67 (AJR) |

| | µg pour 100 g | µg par CAS | % ANC |
|---|---|---|---|
| Vitamine D3 | 0 | 0 | 0 |
| | | | |
| Rapport LA/ALA | | 2,9 | |
| Rapport OL/LA | | 3,6 | |
| Rapport OL/ALA | | 10,5 | |
| Rapport DHA/EPA | | 5,5 | |
| Rapport mono/polyinsaturés | | 2,7 | |
| Rapport OL/DHA | | 197 | |
| Rapport α-tocophérol / γ-tocophérol | | 1,2 | |

### Exemple 9 : Essais laboratoire avec ajout d'huile de lin de pression à froid

Dans une autre variante de réalisation de la composition lipidique, on a introduit dans la formulation de la composition 1% en poids d'huile de lin de pression à froid alimentaire du commerce, de bonne qualité organoleptique, n'ayant pas subi de traitement de raffinage proprement dit et donc pas d'isomérisation de l'acide alpha-linolénique. L'huile de colza mise en oeuvre à raison de 73% est en effet trop basse en acide alpha-linolénique (7,4%) pour atteindre le niveau souhaité d'apport en acide alpha-linolénique.

La composition lipidique a été réalisée à partir :
- d'huile de colza raffinée contenant 61,9% d'acide oléique, 21,4% d'acide linoléique et 7,4 % d'acide alpha-linolénique ;
- d'huile de lin de pression à froid alimentaire contenant 19,3% d'acide oléique, 15,8% d'acide linoléique et 54,1% d'acide alpha-linolénique ; et
- d'huile de tournesol à haute teneur en acide oléique raffinée (Oléisole) contenant 81,7% d'acide oléique, 9,3% d'acide linoléique et moins de 0,5% d'acide alpha-linolénique.

Pour une quantité de 1 500 g préparée comme dans l'exemple 2, on a mis en oeuvre :

| | |
|---|---|
| huile de colza raffinée : | 1 095 g (73%) |
| huile Oléisol® raffinée : | 364,2 g (24.28%) |
| huile de lin de pression à froid : | 15,0 g (1,0%) |
| huile de poisson DHA-27HD : | 16,5 g (1,10%) |
| huile de noisette vierge, éventuellement torréfiée : | 9,0 g (0,60%) |
| Tocoblend™ L50 IP : | 0,3 g (0,02%) |

La composition lipidique obtenue avait un goût satisfaisant, les deux huiles non raffinées de lin et de noisette étant compatibles en goût.

La composition est donnée dans les tableaux 12 et 13 suivants et correspond bien aux revendications 1 à 14.

**TABLEAU 12**

| **ANALYSE DE LA COMPOSITION EN ACIDES GRAS DE L' ESSAI « LIN »** | | | |
|---|---|---|---|
| | | | **Préparation Labo formule Lin 1500 g** |
| **Acides** | | | |
| Myristique | C14 : 0 | | 0,08 |
| Myristoléique | C14 : 1 | | |
| Palmitique | C16 : 0 | | 4,48 |
| Palmitoléique | C16 : 1 | | 0,26 |
| Heptadecanoïque | C17 : 0 | | 0,06 |
| Heptadecanoïque | C17 : 1 | | 0,06 |
| Stéanque | C18 : 0 | | 1,93 |
| Oléique | C18 : 1 | Trans | |
| | | Cis | 65,56 |
| Linoléique | C18 : 2 | Trans | 0,10 |
| | | Cis | 18,06 |
| **Alpha-linolénique** | C18 : 3 | Trans | **0,29** |
| | | Cis | **5,76** |
| Arachidique | C20 : 0 | | 0,47 |
| Gadoléique | C20 : 1 | | 1,04 |
| Eicosadienoïque | C20 : 2 | | 0,05 |
| Eicosapentaénoïque | C20 : 5 | | 0,07 |
| Béhénique | C22 : 0 | | 0,43 |
| Erucique | C22 : 1 | | 0,22 |
| **Docosahexaénoïque** | C22 : 6 | | **0,31** |
| Lignocérique | C24 : 0 | | 0,13 |
| Sélacholéique | C24 : 1 | | 0,09 |
| Non identifiés | | | 0,55 |

| **ANALYSE DE LA TENEUR EN TOCOPHEROLS DE L' ESSAI « LIN»** | | | |
|---|---|---|---|
| Tocophérols totaux (mg/100 g) | | | 76,9 |
| α-tocophérol (%) | | | 51,6 |
| β-tocophérol (%) | | | 1,0 |
| γ-tocophérol (%) | | | 42,7 |
| δ-tocophérol (%) | | | 4,7 |

**TABLEAU 13**

| **VALEURS ET RATIOS DE L' ESSAI « LIN »** | | | |
|---|---|---|---|
| **Composition en acides gras** | g pour 100 g | g par CAS | % ANC par CAS |
| Acides gras saturés | 7,6 | 0,8 | |
| Acides gras monoinsaturés | 67,2 | 6,7 | |
| Acides gras polyinsaturés | 24,6 | 2,5 | |
| Isomères trans totaux | 0,4 | 0,04 | |
| | | | |
| Acide oléique | 65,6 | 6,6 | |
| Acide linoléique | 18,2 | 1,8 | 18 |
| Acide α-linolénique | 6,0 | 0,6 | 30 |
| | | | |

| | mg pour 100 g | mg par CAS | % ANC par CAS |
|---|---|---|---|
| Acide eicosapentaénoïque EPA | 70 | 7 | |
| Acide docosahexaénoïque DHA | 310 | 31 | 26 |
| Acides EPA + DHA | 380 | 38 | |
| α-tocophérol (vitamine E) | 40 | | |
| γ-tocophérol | 33 | | |
| Vitamine E (TE) | 43 | 4,3 | (AJR) |
| Vitamine E (IU) | 65 | 6,5 | 65 (AJR) |
| | µg pour 100 g | µg par CAS | % ANC |
| Vitamine D3 | 0 | 0 | 0 |
| | | | |
| Rapport LA/ALA | | 3,0 | |
| Rapport OL/LA | | 3,6 | |
| Rapport OL/ALA | | 10,8 | |
| Rapport DHA/EPA | | 4,5 | |
| Rapport mono/polyinsaturés | | 2,7 | |
| Rapport OL/DHA | | 212 | |
| Rapport α-tocophérol / γ-tocophérol | | 1,2 | |

## Revendications

1. Composition lipidique contenant plus de 97%, et de préférence plus de 97,8% de lipides d'origine végétale et comprenant au total :
- 58% à 77%, de préférence 59 à 75%, en particulier 60% à 70%, en particulier 67% en poids d'huile de colza notamment raffinée,
- 22% à 41%, de préférence 24 à 39% en poids d'au moins une huile végétale, notamment raffinée, laquelle huile végétale contient moins de 4% d'acide alpha-linolénique et contient 72% à 92% d'acide oléique,
- 0,7% à 2,9%, en particulier 0,7% à 2,2%, en particulier 0,8% à 2,9%, de préférence 0,75% à 2,1% en poids de lipides d'origine marine et/ou microalgale contenant de 25 à 45% d'acide docosahexaénoïque (DHA), de préférence de 27 à 43% de DHA, et contenant moins de 9% d'acide eicosapentaénoïque (EPA),
- 0,1% à 8%, de préférence 0,2% à 5%, et encore de préférence 0,3% à 2% d'une première substance, lipidique, aromatique et sapide telle qu'une huile végétale à goût non raffinée ou vierge, autre qu'une huile d'olive, choisie parmi notamment les huiles vierges de noisette, de macadamia, d'amande, d'avocat, de cameline, de noix, d'amandon de pruneaux, de sésame, de lin, les huiles de fruits secs grillés ou torréfiés, les huiles de graines grillées ou torréfiées ou toutes combinaisons de ces huiles entre elles,
- de 0% à 0,10%, de préférence 0,001% à 0,01% d'une seconde substance aromatique et sapide provenant d'épices, d'aromates, de fruits, de plantes aromatiques telle qu'une huile essentielle, un extrait naturel, un extrait au CO₂ supercritique, une oléorésine, une absolue, notamment d'agrumes, de fruits secs, de coriandre, de basilic, d'herbes méditerranéennes, d'alliacées ou une molécule aromatique naturelle ou de synthèse ou toutes combinaisons de ces substances entre elles,
ladite composition lipidique présentant les propriétés suivantes :
* elle est stable à température ambiante à l'abri de la lumière avant ouverture pendant au moins 6 mois, notamment 12 mois et avantageusement 11 mois,
* elle présente un rapport en poids acide linoléique/acide alpha-linolénique (ω6/ω3) variant de 2,4 à 3,9, et notamment de 2,6 à 3,9,
* elle présente un rapport en poids acide oléique/acide linoléique (ω9/ω6) variant de 3,1 à 4,6,
* elle présente un rapport en poids acide oléique/acide alpha-linolénique (ω9/ω3) variant de 9 à 14,
* elle présente un rapport en poids DHA/EPA variant de 4 à 160, et
* elle ne comprend pas d'acides gras polyinsaturés de la famille ω6 présentant un degré d'insaturation de 3.

2. Composition lipidique selon la revendication 1, **caractérisée en ce qu'**elle comprend :
- de 0,25% à 0,75%, en particulier de 0,30 à 0,65%, en particulier de 0,25 à 0,65% de DHA, en poids de la composition lipidique,
- moins de 0,10% d'EPA, en poids de la composition lipidique,
- de 0,30% à 0,85%, en particulier de 0,35 à 0,75%, en particulier de 0,30 à 0,75% de la somme des acides gras EPA et DHA, en poids de la composition lipidique,

3. Composition lipidique selon les revendications 1 et 2, **caractérisée en ce qu'**elle comprend :
- de 7,0 à 8,5%, et de préférence de 7,2% à 8,3% en poids d'acides gras saturés,
- de 65 à 72%, de préférence de 66 à 71% en poids d'acides gras monoinsaturés, et
- de 20 à 27%, et de préférence de 21 à 26% en poids d'acides gras polyinsaturés.

4. Composition lipidique selon les revendications 1 à 3, **caractérisée en ce qu'**elle comprend de 63 à 70%, et de préférence de 65 à 69% en poids d'acide monoinsaturé oléique (ω9).

5. Composition lipidique selon les revendications 1 à 4, **caractérisée en ce qu'**elle comprend de 15 à 19%, et de préférence de 16 à 18% en poids d'acide polyinsaturé linoléique (ω6).

6. Composition lipidique selon les revendications 1 à 5, **caractérisée en ce qu'**elle comprend de 5,0 à 7,2%, en particulier de 5,0 à 7,0%, et de préférence de 5,3 à 6,9% en poids d'acide polyinsaturé alpha-linolénique (ω3).

7. Composition lipidique selon les revendications 1 à 6, **caractérisée en ce que** le rapport en poids entre les acides gras monoinsaturés et les acides gras polyinsaturés varie de 2,4 à 3,5, et de préférence de 2,5 à 3,3.

8. Composition lipidique selon les revendications 1 à 7, **caractérisée en ce que** le rapport en poids entre les acides gras omega 6 et les acides gras omega 3 varie de 2,4 à 3,9, en particulier de 2,6 à 3,9 et de préférence de 2,6 à 3,3.

9. Composition lipidique selon les revendications 1 à 8, **caractérisée en ce que** le rapport en poids entre l'acide oléique et le DHA varie de 90 à 280, et notamment de 100 à 250, et de préférence de 110 à 240.

10. Composition lipidique selon les revendications 1 à 9, **caractérisée en ce qu'**elle contient une teneur en vitamine E, exprimée en équivalent alpha-tocophérol (TE), comprise de 0,03% à 0,10%, en poids de la composition lipidique.

11. Composition lipidique selon les revendications 1 à 10, **caractérisée en ce qu'**elle contient une teneur en vitamine E, exprimée en équivalent acétate d'alpha-tocophérol (UI), comprise de 0,05% à 0,15%, en poids de la composition lipidique.

12. Composition lipidique selon les revendications 1 à 11, **caractérisée en ce que** le rapport en poids entre l'alpha-tocophérol et le gamma-tocophérol varie de 0,7 à 2,3 et de préférence de 1,2 à 2,0.

13. Composition lipidique selon les revendications 1 à 12, **caractérisée en ce que** la teneur en vitamine D varie de 10 à 150 µg par kg de composition lipidique, notamment de 40 à 60 µg par kg de composition lipidique.

14. Composition lipidique selon les revendications 1 à 13, **caractérisée en ce que** la teneur en acides gras isomères trans totaux est inférieure à 0,8%, et de préférence inférieure à 0,5%, en poids de la composition lipidique.

15. Composition lipidique selon les revendications 1 à 14, **caractérisée en ce qu'**elle ne contient pas d'isomères trans de l'acide docosahexaénoïque (DHA).

16. Composition lipidique selon les revendications 1 à 15, **caractérisée en ce que** le rapport en poids entre la teneur en lipides d'origine marine et/ou microalgale et la teneur en huile végétale à goût non raffinée ou vierge autre que l'huile d'olive est compris de 0,1 à 30, en particulier de 0,3 à 30, en particulier de 0,1 à 22, en particulier de 0,6 à 7, et de préférence de 0,4 à 7.

17. Composition lipidique selon les revendications 1 à 16, **caractérisée en ce que** l'huile végétale contenant moins de 4% d'acide linolénique et contenant de 72% à 92% d'acide oléique est choisie parmi les huiles de tournesol à haute teneur en acide oléique, les huiles de colza à haute teneur en acide oléique et basse teneur en acide alpha-linolénique, les huiles de carthame à haute teneur en acide oléique, les huiles d'arachide à haute teneur en acide oléique, les huiles de noisette, les huiles d'amande ou leurs mélanges.

18. Composition lipidique selon les revendications 1 à 17, **caractérisée en ce que** l'huile de colza est partiellement remplacée ou complémentée par de l'huile de lin à une teneur en huile de lin comprise de 0,5% à 4%, et de préférence de 1% à 3%, en poids de la composition lipidique.

19. Composition lipidique selon les revendications 1 à 17, **caractérisée en ce que** l'huile de colza est partiellement remplacée ou complémentée par de l'huile de périlla à une teneur en huile de périlla comprise de 0,5% à 4%, et de préférence de 1% à 3%, en poids de la composition lipidique.

20. Composition lipidique selon les revendications 1 à 17, **caractérisée en ce que** l'huile de colza est partiellement remplacée ou complémentée par de l'huile de inca inchi à une teneur en huile de inca inchi comprise de 0,5% à 4%, et de préférence de 1% à 3%, en poids de la composition lipidique.

21. Composition lipidique selon les revendications 1 à 17, **caractérisée en ce que** l'huile de colza est partiellement remplacée ou complémentée par de l'huile de pépins de kiwi à une teneur en huile de pépins de kiwi comprise de 0,5% à 4%, et de préférence de 1% à 3%, en poids de la composition lipidique.

22. Composition lipidique selon les revendications 1 à 17, **caractérisée en ce que** l'huile de colza est partiellement remplacée ou complémentée par de l'huile de cameline à une teneur en huile de cameline comprise de 0,5% à 9%, et de préférence de 1% à 8%, en poids de la composition lipidique.

23. Composition lipidique selon les revendications 1 à 17, **caractérisée en ce que** la teneur naturelle en vitamine E (alpha-tocophérol) des huiles de la composition est complétée par l'ajout d'alpha-tocophérol naturel à raison de 0,004% à 0,08%, et de préférence de 0,01% à 0,06%, en poids de la composition lipidique.

24. Composition lipidique selon les revendications 1 à 17, **caractérisée en ce que** la teneur naturelle en vitamine E (alpha-tocophérol) des huiles de la composition est complétée par l'ajout d'acétate d'alpha-tocophérol de synthèse de 0,006% à 0,12%, et de préférence de 0,015% à 0,09%, en poids de la composition lipidique.

25. Composition lipidique selon les revendications 1 à 17, **caractérisée en ce que** la teneur naturelle en vitamine E (alpha-tocophérol) des huiles de la composition est complétée par l'ajout d'un mélange antioxygène de tocophérols naturels à des teneurs comprises à raison de 0,01% à 0,05%, et de préférence de 0,02% à 0,04%, en poids de la composition lipidique.

26. Composition lipidique selon les revendications 1 à 17, **caractérisée en ce que** la première substance aromatique et sapide est une huile de noisette vierge éventuellement torréfiée, dont la teneur est comprise de 0,1% à 8%, de préférence de 0,2% à 5%, et encore de préférence de 0,3% à 2%, en poids de la composition lipidique.

27. Composition lipidique selon les revendications 1 à 17, **caractérisée en ce que** la seconde substance aromatique et sapide est une huile essentielle d'agrumes dont la teneur est comprise de 0,001% à 0,010%, en poids de la composition lipidique.

28. Composition lipidique selon les revendications 1 à 17, **caractérisée en ce qu'**elle contient des extraits naturels antioxygènes riches en composés phénoliques, notamment des extraits de romarin ou de sauge, dont la teneur est comprise de 0,005% à 0,2%, en poids de la composition lipidique.

29. Composition lipidique selon les revendications 1 à 17, **caractérisée en ce qu'**elle est supplémentée par du rétinol (vitamine A), notamment à des teneurs comprises de 5 000 à 15 000 µg de rétinol par kg de composition lipidique.

30. Composition lipidique selon les revendications 1 à 17, **caractérisée en ce qu'**elle est supplémentée par du β-carotène (provitamine A), notamment à des teneurs comprises de 30 à 90 mg de β-carotène par kg de composition lipidique,

31. Composition lipidique selon l'une quelconque des revendications 1 à 17, **caractérisée en ce qu'**elle comprend :
- 0,05 à 0,12% d'acide gras C14:0,
- 4,2 à 4,9%, notamment 4,2 à 4,6% d'acide gras C16:0,
- 0,2 à 0,3% d'acide gras C16:1,
- 0,04 à 0,06% d'acide gras C17:0,
- 0,05 à 0,08% d'acide gras C17:1,
- 1,7 à 2,2% d'acide gras C18:0,
- 63 à 70% d'acide gras C18:1,
- 14 à 19% d'acide gras C18:2 ω6,
- 5,0 à 7,2%, notamment 5,0 à 7,0% d'acide gras C18:3 ω3,
- 0,4 à 0,6% d'acide gras C20:0,
- 0,8 à 1,5% d'acide gras C20:1,
- 0,04 à 0,11 % d'acide gras C20:2,
- 0,04 à 0,09% d'acide gras C20:5 ω3 (EPA)
- 0,3 à 0,6% d'acide gras C22:0,
- 0,1 à 0,3% d'acide gras C22:1,
- 0,01 à 0,02% d'acide gras C22:5 ω3 (DPA)
- 0 à 0,13% d'acide gras C22:5 ω6 (DPA)
- 0,24 à 0,76%, notamment 0,24 à 0,66% d'acide gras C22:6 ω3 (DHA)
- 0,1 à 0,2% d'acide gras C24:0, et
- 0,07 à 0,12% d'acide gras C24:1.

32. Composition lipidique selon l'une quelconque des revendications 1 à 17, **caractérisée en ce qu'**elle comprend :
- 0,07% d'acide gras C14:0,
- 4,34% d'acide gras C16:0,
- 0,24% d'acide gras C16:1,
- 0,05% d'acide gras C17:0,
- 0,06% d'acide gras C17:1,
- 1,84% d'acide gras C18:0,
- 68,12% d'acide gras C18:1,
- 16,15% d'acide gras C18:2 ω6,
- 6,05% d'acide gras C18:3 ω3,
- 0,46% d'acide gras C20:0,
- 0,99% d'acide gras C20:1,
- 0,05% d'acide gras C20:2,
- 0,06% d'acide gras C20:5 ω3 (EPA)
- 0,42% d'acide gras C22:0,
- 0,19% d'acide gras C22:1,
- 0,01% d'acide gras C22:5 ω3 (DPA)
- 0,29% d'acide gras C22:6 ω3 (DHA)
- 0,17% d'acide gras C24:0, et
- 0,10% d'acide gras C24:1.

33. Composition lipidique selon l'une quelconque des revendications 1 à 30, **caractérisée en ce qu'**elle comprend :
- 63 à 77% d'huile de colza raffinée,
- 23 à 37% d'huile de tournesol à haute teneur en acide oléique,
- 0,75% à 1,15% d'huile de poisson riche en DHA,
- 0,3% à 2% d'huile de noisette vierge, éventuellement torréfiée,
- 0,02% à 0,04% de mélange de tocophérols naturels,
- 0,001% à 0,01% d'huile essentielle d'agrumes.
- 40 µg à 60 µg de vitamine D par kg de composition lipidique.

34. Composition lipidique selon l'une quelconque des revendications 1 à 30, **caractérisée en ce qu'**elle comprend :
- 63 à 77% d'huile de colza raffinée,
- 23 à 37% d'huile de tournesol à haute teneur en acide oléique,
- 0,70% à 0,80% d'huile microalgale riche en DHA,
- 0,3% à 2% d'huile de noisette vierge, éventuellement torréfiée,
- 0,02% à 0,04% de mélange de tocophérols naturels,
- 0,001% à 0,01% d'huile essentielle d'agrumes,
- 40 µg à 60 µg de vitamine D par kg de composition lipidique.

35. Composition lipidique selon l'une quelconque des revendications 1 à 30, **caractérisée en ce qu'**elle comprend :
- 70% d'huile de colza raffinée
- 28,5% d'huile de tournesol à haute teneur en acide oléique,
- 1% d'huile de poisson riche en DHA,
- 0,5% d'huile de noisette vierge, éventuellement torréfiée,
- 0,03% de mélange de tocophérols naturels,
- 0,003% d'huile essentielle d'agrumes,
- 50 µg de vitamine D par kg de composition lipidique.

36. Composition lipidique selon l'une quelconque des revendications 1 à 30, **caractérisée en ce qu'**elle comprend :
- 70% d'huile de colza raffinée
- 28,7% d'huile de tournesol à haute teneur en acide oléique,
- 0,8% d'huile microalgale riche en DHA,
- 0,5% d'huile de noisette vierge, éventuellement torréfiée,
- 0,03% de mélange de tocophérols naturels,
- 0,003% d'huile essentielle d'agrumes,
- 50 µg de vitamine D par kg de composition lipidique.

37. Utilisation d'une composition lipidique selon l'une quelconque des revendications 1 à 36, dans une huile végétale alimentaire, destinée à une utilisation comme huile d'assaisonnement, huile de cuisson, ou huile multi-usages.

38. Utilisation d'une composition lipidique selon l'une quelconque des revendications 1 à 36, dans une huileuse aromatique et/ou aromatisée.

39. Utilisation d'une composition lipidique selon l'une quelconque des revendications 1 à 36, dans une préparation condimentaire, émulsionnée ou non, à base d'huile végétale, choisie parmi mayonnaises, mayonnaises allégées, sauces pour salades et crudités, vinaigrettes, vinaigrettes allégées, sauces culinaires, destinées à l'assaisonnement ou à l'accompagnement des plat.

40. Utilisation d'une composition lipidique selon l'une quelconque des revendications 1 à 36, dans un complément alimentaire, choisi parmi des capsules ou gélules.

41. Utilisation d'une composition lipidique selon l'une quelconque des revendications 1 à 36, dans une composition à base de lait et/ou dérivés laitiers, choisie parmi crèmes, laits fermentés, yoghourts, sauces, fromages et desserts lactés.

## Patentansprüche

1. Lipidische Zusammensetzung, die mehr als 97% und vorzugsweise mehr als 97,8% Lipide pflanzlichen Ursprungs enthält und insgesamt umfasst:
- 58 Gew.% bis 77 Gew.%, vorzugsweise 59 bis 75 Gew.%, insbesondere 60 Gew.% bis 70 Gew.%, insbesondere 67 Gew.% Rapsöl, insbesondere raffiniert,
- 22 Gew.% bis 41 Gew.%, vorzugsweise 24 bis 39 Gew.% mindestens eines pflanzlichen Öls, insbesondere raffiniert, wobei das pflanzliche Öl mindestens 4% Alpha-Linolensäure enthält und 72% bis 92% Ölsäure enthält,
- 0,7 Gew.% bis 2,9 Gew.%, insbesondere 0,7 Gew.% bis 2,2 Gew.%, insbesondere 0,8 Gew.% bis 2,9 Gew.%, vorzugsweise 0,75 Gew.% bis 2,1 Gew.% Lipide, die aus marinen und/oder Mikroalgen stammen, welche 25 bis 45% Docosahexansäure (DHA) enthalten, vorzugsweise 27 bis 43% DHA und mindestens 9% Eicosapentansäure (EPA) enthalten,
- 0,1% bis 8%, vorzugsweise 0,2% bis 5% und besonders bevorzugt 0,3% bis 2% einer ersten lipidischen, aromatischen und schmackhaften Substanz, wie etwa ein pflanzliches Öl mit nicht raffiniertem oder natürlichem Geschmack, ausgenommen Olivenöl, das insbesondere ausgewählt ist aus natürlichen Ölen von Haselnuss, von Makadamia, von Mandel, von Avocado, von der Dotterblume, aus Nuss, aus Pflaumenkern, von Sesam, von Lein, Öle aus gegrilltem oder geröstetem Backobst, Öle gegrillter oder gerösteter Samen oder sämtliche Kombinationen dieser Öle untereinander,
- 0% bis 0,10%, vorzugsweise 0,001% bis 0,01% einer zweiten aromatischen und schmackhaften Substanz aus Kräutern, aus Gewürzen, aus Früchten, aus aromatischen Pflanzen, wie etwa ein essentielles Öl, ein natürliches Extrakt, ein superkritisches CO₂ Extrakt, ein Oleoresin, eine Essenz, insbesondere aus Zitrusfrüchten, aus Backobst, aus Koriander, aus Basilikum, aus mediterranen Kräutern, aus Zwiebelgewächsen oder ein aromatisches natürliches oder synthetisiertes Molekül oder sämtliche Kombinationen dieser Substanzen untereinander,
wobei die lipidische Zusammensetzung die folgenden Eigenschaften aufweist:
* sie ist lichtgeschützt bei Umgebungstemperatur vor dem Öffnen mindestens 6 Monate, insbesondere 12 Monate und vorzugsweise 11 Monate stabil
* sie weist ein Gewichtsverhältnis von Linolsäure/Alpha-Linolensäure (ω6/ω3) auf, das zwischen 2,4 und 3,9 variiert, und insbesondere zwischen 2,6 und 3,9,
* sie weist ein Gewichtsverhältnis von Ölsäure/ Linolsäure (ω9/ω6) auf, das zwischen 3,1 und 4,6 variiert,
* sie weist ein Gewichtsverhältnis von Ölsäure/ Alpha-Linolensäure (ω9/ω3) auf, das zwischen 9 und 14 variiert,
* sie weist ein Gewichtsverhältnis von DHA/EPA auf, das zwischen 4 und 160 variiert und
* sie umfasst keine mehrfach ungesättigten Fettsäuren aus der ω6 Familie, die einen Ungesättigtkeitsgrad von 3 aufweisen.

2. Lipidische Zusammensetzung nach Anspruch 1, **dadurch gekennzeichnet, dass** sie Folgendes umfasst:
- 0,25 Gew.% bis 0,75 Gew.%, insbesondere 0,30 bis 0,65 Gew.%, insbesondere 0,25 bis 0,65 Gew.% der lipidischen Zusammensetzung an DHA,
- weniger als 0,10 Gew.% der lipidischen Zusammensetzung an EPA,
- 0,30 Gew.% bis 0,85 Gew%, insbesondere 0,35 bis 0,75 Gew.%, insbesondere 0,30 bis 0,75 Gew.% der lipidischen Zusammensetzung an Summe der Fettsäuren EPA und DHA.

3. Lipidische Zusammensetzung nach Anspruch 1 und 2, **dadurch gekennzeichnet, dass** sie Folgendes umfasst:
- 7,0 bis 8,5 Gew.% und vorzugsweise 7,2 Gew.% bis 8,3 Gew.% gesättigter Fettsäuren,
- 65 bis 72 Gew. %, vorzugsweise 66 bis 71 Gew.% an einfach gesättigten Fettsäuren und
- 20 bis 27 Gew.% und vorzugsweise 21 bis 26 Gew.% mehrfach gesättigter Fettsäuren.

4. Lipidische Zusammensetzung nach den Ansprüchen 1 bis 3, **dadurch gekennzeichnet, dass** sie 63 bis 70 Gew.%, vorzugsweise 65 bis 69 Gew.% einfach ungesättigter Ölsäure (ω9) umfasst.

5. Lipidische Zusammensetzung nach den Ansprüchen 1 bis 4, **dadurch gekennzeichnet, dass** sie 15 bis 19 Gew.%, vorzugsweise 16 bis 18 Gew.% mehrfach ungesättigter Linolsäure (ω6) umfasst.

6. Lipidische Zusammensetzung nach den Ansprüchen 1 bis 5, **dadurch gekennzeichnet, dass** sie 5,0 bis 7,2 Gew.%, insbesondere 5,0 bis 7,0 Gew.% und vorzugsweise 5,3 bis 6,9 Gew.% mehrfach ungesättigter Alpha-Linolensäure (ω3) umfasst.

7. Lipidische Zusammensetzung nach den Ansprüchen 1 bis 6, **dadurch gekennzeichnet, dass** das Gewichtsverhältnis zwischen einfach ungesättigten Fettsäuren und mehrfach ungesättigten Fettsäuren zwischen 2,4 und 3,5 und vorzugsweise zwischen 2,5 und 3,3 variiert.

8. Lipidische Zusammensetzung nach den Ansprüchen 1 bis 7, **dadurch gekennzeichnet, dass** das Gewichtsverhältnis zwischen Omega-6 Fettsäuren und Omega-3 Fettsäuren zwischen 2,4 und 3,9, insbesondere zwischen 2,6 und 3,9 und vorzugsweise zwischen 2,6 und 3,3 variiert.

9. Lipidische Zusammensetzung nach den Ansprüchen 1 bis 8, **dadurch gekennzeichnet, dass** das Gewichtsverhältnis zwischen Ölsäure und DHA zwischen 90 und 280 und insbesondere zwischen 100 und 250 und vorzugsweise zwischen 110 und 240 variiert.

10. Lipidische Zusammensetzung nach den Ansprüchen 1 bis 9, **dadurch gekennzeichnet, dass** sie einen Gehalt an Vitamin E enthält, der als Alpha-Tocopheroläquivalent (TE) ausgedrückt wird, der zwischen 0,03 Gew.% und 0,10 Gew.% der lipidischen Zusammensetzung beträgt.

11. Lipidische Zusammensetzung nach den Ansprüchen 1 bis 10, **dadurch gekennzeichnet, dass** sie einen Gehalt an Vitamin E enthält, der als Alpha-Tocopherolacetatäquivalent (UI) ausgedrückt wird, der zwischen 0,05 Gew.% und 0,15 Gew.% der lipidischen Zusammensetzung beträgt.

12. Lipidische Zusammensetzung nach den Ansprüchen 1 bis 11, **dadurch gekennzeichnet, dass** das Gewichtsverhältnis zwischen Alpha-Tocopherol und Gamma-Tocopherol zwischen 0,7 und 2,3 und vorzugsweise zwischen 1,2 und 2,0 variiert.

13. Lipidische Zusammensetzung nach den Ansprüchen 1 bis 12, **dadurch gekennzeichnet, dass** der Gehalt an Vitamin D zwischen 10 und 150 µg pro kg der lipidischen Zusammensetzung variiert, insbesondere zwischen 40 und 60 µg pro kg der lipidischen Zusammensetzung.

14. Lipidische Zusammensetzung nach den Ansprüchen 1 bis 13, **dadurch gekennzeichnet, dass** der Gesamtgehalt an Transfettsäureisomeren weniger als 0,8 Gew.% und vorzugsweise weniger als 0,5 Gew.% der lipidischen Zusammensetzung beträgt.

15. Lipidische Zusammensetzung nach den Ansprüchen 1 bis 14, **dadurch gekennzeichnet, dass** sie keine Transisomere von Docosahexansäure (DHA) enthält.

16. Lipidische Zusammensetzung nach den Ansprüchen 1 bis 15, **dadurch gekennzeichnet, dass** das Gewichtsverhältnis zwischen dem Gehalt an Lipiden, die aus marinen und/oder Mikroalgen stammen und dem Gehalt an pflanzlichen Ölen mit nicht raffiniertem oder natürlichen Geschmack, ausgenommen Olivenöl, zwischen 0,1 und 30, insbesondere zwischen 0,3 und 30, insbesondere zwischen 0,1 und 22, insbesondere zwischen 0,6 und 7 und vorzugsweise zwischen 0,4 und 7 beträgt.

17. Lipidische Zusammensetzung nach den Ansprüchen 1 bis 16, **dadurch gekennzeichnet, dass** das pflanzliche Öl, das weniger als 4% Linolensäure enthält und 72% bis 92% Ölsäure enthält ausgewählt ist aus Sonnenblumenölen mit hohem Gehalt an Ölsäure, Rapsölen mit hohem Gehalt an Ölsäure und niedrigem Gehalt an Alpha-Linolensäure, Saflorölen mit hohem Gehalt an Ölsäure, Erdnussölen mit hohem Gehalt an Ölsäure, Haselnussölen, Mandelölen oder deren Gemischen.

18. Lipidische Zusammensetzung nach den Ansprüchen 1 bis 17, **dadurch gekennzeichnet, dass** das Rapsöl teilweise ersetzt oder ergänzt ist durch Leinöl mit einem Leinölgehalt zwischen 0,5 Gew.% und 4 Gew.% und vorzugsweise zwischen 1 Gew.% und 3 Gew.% der lipidischen Zusammensetzung.

19. Lipidische Zusammensetzung nach den Ansprüchen 1 bis 17, **dadurch gekennzeichnet, dass** das Rapsöl teilweise ersetzt oder ergänzt ist durch Perillaöl mit einem Perillaölgehalt zwischen 0,5 Gew.% und 4 Gew.% und vorzugsweise zwischen 1 Gew.% und 3 Gew.% der lipidischen Zusammensetzung.

20. Lipidische Zusammensetzung nach den Ansprüchen 1 bis 17, **dadurch gekennzeichnet, dass** das Rapsöl teilweise ersetzt oder ergänzt ist durch Inca-Inchi Öl mit einem Inca-Inchi Ölgehalt zwischen 0,5 Gew.% und 4 Gew.% und vorzugsweise zwischen 1 Gew.% und 3 Gew.% der lipidischen Zusammensetzung.

21. Lipidische Zusammensetzung nach den Ansprüchen 1 bis 17, **dadurch gekennzeichnet, dass** das Rapsöl teilweise ersetzt oder ergänzt ist durch Kiwikernöl mit einem Kiwikernölgehalt zwischen 0,5 Gew.% und 4 Gew.% und vorzugsweise zwischen 1 Gew.% und 3 Gew.% der lipidischen Zusammensetzung.

22. Lipidische Zusammensetzung nach den Ansprüchen 1 bis 17, **dadurch gekennzeichnet, dass** das Rapsöl teilweise ersetzt oder ergänzt ist durch Dotterblumenöl mit einem Dotterblumenölgehalt zwischen 0,5 Gew.% und 9 Gew.% und vorzugsweise zwischen 1 Gew.% und 8 Gew.% der lipidischen Zusammensetzung.

23. Lipidische Zusammensetzung nach den Ansprüchen 1 bis 17, **dadurch gekennzeichnet, dass** der natürliche Gehalt an Vitamin E (Alpha-Tocopherol) der Öle der Zusammensetzung durch Hinzufügen von natürlichem Alpha-Tocopherol zu 0,004 Gew.% bis 0,08 Gew.% und vorzugsweise 0,01 Gew.% bis 0,06 Gew.% der lipidischen Zusammensetzung ergänzt wird.

24. Lipidische Zusammensetzung nach den Ansprüchen 1 bis 17, **dadurch gekennzeichnet, dass** der natürliche Gehalt an Vitamin E (Alpha-Tocopherol) der Öle der Zusammensetzung durch Hinzufügen von 0,006 Gew.% bis 0,12 Gew.% und vorzugsweise 0,015 Gew.% bis 0,09 Gew.% der lipidischen Zusammensetzung an synthetischem Alpha-Tocopherolacetat ergänzt wird.

25. Lipidische Zusammensetzung nach den Ansprüchen 1 bis 17, **dadurch gekennzeichnet, dass** der natürliche Gehalt an Vitamin E (Alpha-Tocopherol) der Öle der Zusammensetzung durch Hinzufügen eines Antioxidantiengemischs natürlicher Tocopherole mit Gehalten von 0,01 Gew.% bis 0,05 Gew.% und vorzugsweise 0,02 Gew.% bis 0,04 Gew.% der lipidischen Zusammensetzung ergänzt wird.

26. Lipidische Zusammensetzung nach den Ansprüchen 1 bis 17, **dadurch gekennzeichnet, dass** die erste aromatische und schmackhafte Substanz ein natürliches, gegebenenfalls geröstetes Haselnussöl ist, dessen Gehalt zwischen 0,1 Gew.% und 8 Gew.%, vorzugsweise zwischen 0,2 Gew.% und 5 Gew.% und besonders bevorzugt zwischen 0,3 Gew.% und 2 Gew.% der lipidischen Zusammensetzung beträgt.

27. Lipidische Zusammensetzung nach den Ansprüchen 1 bis 17, **dadurch gekennzeichnet, dass** die zweite aromatische und schmackhafte Substanz ein essentielles Zitrusfruchtöl ist, dessen Gehalt zwischen 0,001 Gew.% und 0,010 Gew.% der lipidischen Zusammensetzung beträgt.

28. Lipidische Zusammensetzung nach den Ansprüchen 1 bis 17, **dadurch gekennzeichnet, dass** sie natürliche Antioxidatienextrakte enthält, die reich an phenolischen Verbindungen sind, insbesondere Extrakte von Rosmarin oder von Salbei, deren Gehalt zwischen 0,005 Gew.% und 0,2 Gew.% der lipidischen Zusammensetzung beträgt.

29. Lipidische Zusammensetzung nach den Ansprüchen 1 bis 17, **dadurch gekennzeichnet, dass** sie durch Retinol (Vitamin A) ergänzt wird, insbesondere zu Gehalten, die zwischen 5000 und 15000 µg Retinol pro kg der lipidischen Zusammensetzung betragen.

30. Lipidische Zusammensetzung nach den Ansprüchen 1 bis 17, **dadurch gekennzeichnet, dass** sie durch ß-Carotin (Provitamin A) ergänzt wird, insbesondere zu Gehalten, die zwischen 30 und 90 mg ß-Carotin pro kg der lipidischen Zusammensetzung betragen.

31. Lipidische Zusammensetzung nach den Ansprüchen 1 bis 17, **dadurch gekennzeichnet, dass** sie Folgendes umfasst :
- 0,05 bis 0,12% C14:0 Fettsäure,
- 4,2 bis 4,9%, insbesondere 4,2 bis 4,6% C16:0 Fettsäure,
- 0,2 bis 0,3% C16:1 Fettsäure,
- 0,04 bis 0,06% C17:0 Fettsäure,
- 0,05 bis 0,08% C17:1 Fettsäure,
- 1,7 bis 2,2% C18:0 Fettsäure,
- 63 bis 70% C18:1 Fettsäure,
- 14 bis 19% C18:2 ω6 Fettsäure
- 5,0 bis 7,2%, insbesondere 5,0 bis 7,0% C18:3 ω3 Fettsäure,
- 0,4 bis 0,6% C20:0 Fettsäure,
- 0,8 bis 1,5% C20:1 Fettsäure,
- 0,04 bis 0,11% C20:2 Fettsäure,
- 0,04 bis 0,09% C20:5 ω3 Fettsäure (EPA),
- 0,3 bis 0,6% C22:0 Fettsäure,
- 0,1 bis 0,3% C22:1 Fettsäure,
- 0,01 bis 0,02% C22:5 ω3 Fettsäure (DPA),
- 0 bis 0,13% C22:5 ω6 Fettsäure (DPA),
- 0,24 bis 0,76%, insbesondere 0,24 bis 0,66% C22:6 ω3 Fettsäure (DHA),
- 0,1 bis 0,2% C24:0 Fettsäure und
- 0,07 bis 0,12% C24:1 Fettsäure.

32. Lipidische Zusammensetzung nach den Ansprüchen 1 bis 17, **dadurch gekennzeichnet, dass** sie Folgendes umfasst :
- 0,07% C14:0 Fettsäure,
- 4,34% C16:0 Fettsäure,
- 0,24% C16:1 Fettsäure,
- 0,05% C17:0 Fettsäure,
- 0,06% C17:1 Fettsäure,
- 1,84% C18:0 Fettsäure,
- 68,12% C18:1 Fettsäure,
- 16,15% C18:2 ω6 Fettsäure
- 6,05% C18:3 ω3 Fettsäure,
- 0,46% C20:0 Fettsäure,
- 0,99% C20:1 Fettsäure,
- 0,05% 20:2 Fettsäure,
- 0,06% C20:5 ω3 Fettsäure (EPA),
- 0,42% C22:0 Fettsäure,
- 0,19% C22:1 Fettsäure,
- 0,01% C22:5 ω3 Fettsäure (DPA),
- 0,29% C22:6 ω3 Fettsäure (DHA),
- 0,17% C24:0 Fettsäure und
- 0,10% C24:1 Fettsäure.

33. Lipidische Zusammensetzung nach den Ansprüchen 1 bis 30, **dadurch gekennzeichnet, dass** sie Folgendes umfasst :
- 63 bis 77% raffiniertes Rapsöl,
- 23 bis 37% Sonnenblumenöl mit hohem Gehalt an Ölsäure,
- 0,75% bis 1,15% Fischöl reich an DHA,
- 0,3% bis 2% natürliches Haselnussöl, gegebenenfalls geröstet,
- 0,02% bis 0,04% natürliches Tocopherolgemisch,
- 0,001% bis 0,01% essentielles Zitrusfruchtöl,
- 40 µg bis 60 µg Vitamin D pro kg der lipidischen Zusammensetzung.

34. Lipidische Zusammensetzung nach den Ansprüchen 1 bis 30, **dadurch gekennzeichnet, dass** sie Folgendes umfasst :
- 63 bis 77% raffiniertes Rapsöl,
- 23 bis 37% Sonnenblumenöl mit hohem Gehalt an Ölsäure,
- 0,70% bis 0,80% Mikroalgenöl reich an DHA,
- 0,3% bis 2% natürliches Haselnussöl, gegebenenfalls geröstet,
- 0,02% bis 0,04% natürliches Tocopherolgemisch,
- 0,001% bis 0,01% essentielles Zitrusfruchtöl,
- 40 µg bis 60 µg Vitamin D pro kg der lipidischen Zusammensetzung.

35. Lipidische Zusammensetzung nach den Ansprüchen 1 bis 30, **dadurch gekennzeichnet, dass** sie Folgendes umfasst:
- 70% raffiniertes Rapsöl,
- 28,5% Sonnenblumenöl mit hohem Gehalt an Ölsäure,
- 1% Fischöl reich an DHA,
- 0,5% natürliches Haselnussöl, gegebenenfalls geröstet,
- 0,03% natürliches Tocopherolgemisch,
- 0,003% essentielles Zitrusfruchtöl,
- 50 µg Vitamin D pro kg der lipidischen Zusammensetzung.

36. Lipidische Zusammensetzung nach den Ansprüchen 1 bis 30, **dadurch gekennzeichnet, dass** sie Folgendes umfasst :
- 70% raffiniertes Rapsöl,
- 28,7% Sonnenblumenöl mit hohem Gehalt an Ölsäure,
- 0,8% Mikroalgenöl reich an DHA,
- 0,5% natürliches Haselnussöl, gegebenenfalls geröstet,
- 0,03% natürliches Tocopherolgemisch,
- 0,003% essentielles Zitrusfruchtöl,
- 50 µg Vitamin D pro kg der lipidischen Zusammensetzung.

37. Verwendung einer lipidischen Zusammensetzung nach einem der Ansprüche 1 bis 36 in einem pflanzlichen Nahrungsmittelöl, das zu einer Verwendung als Würzöl, Bratöl oder Vielzwecköl vorgesehen ist.

38. Verwendung einer lipidischen Zusammensetzung nach einem der Ansprüche 1 bis 36 in einem aromatischen oder aromatisierten Ölpräparat.

39. Verwendung einer lipidischen Zusammensetzung nach einem der Ansprüche 1 bis 36 in einer Gewürzzubereitung, emulgiert oder nicht, auf Basis von pflanzlichem Öl, ausgewählt aus Mayonnaisen, kalorienarmen Mayonnaisen, Saucen für Salate und Rohkost, Vinaigretten, kalorienarmen Vinaigretten, - kulinarischen Soßen, die zum Würzen oder als Beilage zu Hauptspeisen vorgesehen sind.

40. Verwendung einer lipidischen Zusammensetzung nach einem der Ansprüche 1 bis 36 als Nahrungsergänzungsmittel, ausgewählt aus Kapseln oder Hartkapseln.

41. Verwendung einer lipidischen Zusammensetzung nach einem der Ansprüche 1 bis 36 in einer Zusammensetzung auf Milchbasis und/oder auf Basis von Milchderivaten, ausgewählt aus Sahne, fermentierter Milch, Joghurt, Saucen, Käse und Milchdesserts.

## Claims

1. Lipidic composition containing more than 97% and preferably more than 97.8% of vegetal lipids and including in total:
- 58% to 77%, preferably 59 to 75%, especially 60% to 70%, especially 67% by weight of rapeseed oil in particular refined,
- 22% to 41%, preferably 24 to 39% by weight of at least one vegetal oil, in particular refined, the said vegetal oil contains less than 4% of alpha-linolenic acid and contains 72% to 92% of oleic acid,
- 0,7% to 2,9%, especially 0,7% to 2,2%, especially 0,8% to 2,9%, preferably 0,75% to 2,1% by weight of marine and/or microalgale-origin lipids containing from 25 to 45% of docosahexaenoic acid (DHA), preferably from 27 to 43% of DHA, and containing less than 9% of eicosapentaenoic acid (EPA),
- 0,1% to 8%, preferably 0,2% to 5%, and even more preferably 0,3% to 2% of a first lipidic, aromatic and sapid substance such as a vegetal oil with an unrefined or virgin taste, other than olive oil, chosen in particular among hazelnut, macadamia nut, almond, avocado, camelina, walnut, plum kernel, sesame, flaxseed virgin oils, grilled or roasted dried fruits oils, grilled or roasted seeds oils or any combination of these oils among them,
- from 0% to 0,10%, preferably 0,001% to 0.01 % of a second aromatic and sapid substance obtained from spices, herbs, fruits, aromatic plants such as an essential oil, a natural extract, an extract of supercritical CO₂, an oleoresin, an absolute, in particular of citrus fruit, of dried fruit, of coriander, of basil, of mediterranean herbs, of alliaceae or a natural or synthetic aromatic molecule or any combination of these substances among them,
the said lipidic composition showing the following properties:
* it is stable at room temperature away from light before opening during at least 6 month, notably 12 month and advantageously 11 month,
* it shows a weight ratio of linoleic acid/alpha-linolenic acid (ω6/ω3) varying from 2,4 to 3,9, and in particular from 2,6 to 3,9,
* it shows a weight ratio of oleic acid/ linoleic acid (ω9/ω6) varying from 3,1 to 4,6,
* it shows a weight ratio of oleic acid/ alpha-linolenic acid (ω9/ω3) varying from 9 to 14,
* it shows a weight ratio of DHA/EPA varying from 4 to 160, and
*it doesn't include polyunsaturated fatty acid of the ω6 family showing a degree of unsaturation of 3.

2. Lipidic composition according to claim 1, **characterized in that** it includes
- from 0,25% to 0,75%, especially from 0,30 to 0,65%, especially from 0,25 to 0,65% of DHA, by weight of the lipidic composition,
- less than 0,10% of EPA, by weight of the lipidic composition,
- from 0,30% to 0,85%, especially from 0,35 to 0,75%, especially from 0,30 to 0,75% of the EPA and DHA fatty acid sum, by weight of the lipidic composition,

3. Lipidic composition according to claims 1 and 2, **characterized in that** it includes
- from 7,0 to 8,5%, and preferably 7,2% to 8,3% by weight of saturated fatty acid,
- from 65 to 72%, preferably 66 to 71% by weight of monounsaturated fatty acid, and
- from 20 to 27%, and preferably 21 to 26% by weight of polyunsaturated fatty acid.

4. Lipidic composition according to claims 1 to 3, **characterized in that** it includes from 63 to 70%, and preferably from 65 to 69% by weight of oleic monounsaturated acid (ω9).

5. Lipidic composition according to claims 1 to 4, **characterized in that** it includes from 15 to 19%, and preferably from 16 to 18% by weight of linoleic polyunsaturated acid (ω6).

6. Lipidic composition according to claims 1 to 5, **characterized in that** it includes from 5,0 to 7,2%, especially from 5,0 to 7,0%, and preferably 5,3 to 6,9% by weight of polyunsaturated alpha-linolenic acid (ω3).

7. Lipidic composition according to claims 1 to 6, **characterized in that** the weight ratio between the monounsaturated fatty acid and the polyunsaturated fatty acid is varying from 2,4 to 3,5, and preferably from 2,5 to 3,3.

8. Lipidic composition according to claims 1 to 7, **characterized in that** the weight ratio between the omega 6 fatty acids and the omega 3 fatty acids is varying from 2,4 to 3,9, especially from 2,6 to 3,9 and preferably from 2,6 to 3,3.

9. Lipidic composition according to claims 1 to 8, **characterized in that** the weight ratio between oleic acid and DHA is varying from 90 to 280, and notably from 100 to 250, and preferably from 110 to 240.

10. Lipidic composition according to claims 1 to 9, **characterized in that** it contains a vitamin E content, expressed in alpha-tocopherol equivalent (TE), comprised from 0,03% to 0,10%, by weight of the lipidic composition.

11. Lipidic composition according to claims 1 to 10, **characterized in that** it contains a vitamin E content, expressed in alpha-tocopherol acetate equivalent (UI), comprised from 0,05% to 0.15% by weight of the lipidic composition.

12. Lipidic composition according to claims 1 to 11, **characterized in that** the weight ratio between alpha-tocopherol and gamma-tocopherol is varying from 0,7 to 2,3 and preferably from 1,2 to 2,0.

13. Lipidic composition according to claims 1 to 12, **characterized in that** the vitamin D content is varying from 10 to 150 µg per kg of lipidic composition, in particular from 40 to 60µg per kg of lipidic composition.

14. Lipidic composition according to claims 1 to 13, **characterized in that** the total isomeric trans fatty acid content is lower to 0,8%, and preferably lower to 0,5% by weight of the lipidic composition.

15. Lipidic composition according to claims 1 to 14, **characterized in that** it does not contain any trans isomer of the docosahexanoic acid (DHA).

16. Lipidic composition according to claims 1 to 15, **characterized in that** the weight ratio between the marine and/or microalgale-origin lipids content and the content of vegetable oil with an unrefmed or virgin taste, other than olive oil is comprised from 0,1 to 30, especially from 0,3 to 30, especially from 0,1 to 22, especially from 0,6 to 7, and especially from 0,4 to 7.

17. Lipidic composition according to claims 1 to 16, **characterized in that** a vegetable oil including less than 4% of linolenic acid and including from 72% to 92% of oleic acid is chosen among sunflower oils with a high oleic acid content, rapeseed oils with a high oleic acid content and a low alpha-linolenic acid content, safflower oils with a high oleic acid content, groundnut oils with a high oleic acid content, hazelnut oils, almond oils or a mix of them.

18. Lipidic composition according to claims 1 to 17, **characterized in that** the rapeseed oil is partly replaced or supplemented by flaxseed oil with a flaxseed oil content comprised from 0,5% to 4%, and preferably from 1% to 3% by weight of the lipidic composition.

19. Lipidic composition according to claims 1 to 17, **characterized in that** the rapeseed oil is partly replaced or supplemented by perilla oil with a perilla oil content comprised from 0,5% to 4%, and preferably from 1% to 3% by weight of the lipidic composition.

20. Lipidic composition according to claims 1 to 17, **characterized in that** the rapeseed oil is partly replaced or supplemented by inca inchi oil with an inca inchi oil content comprised from 0,5 % to 4%, and preferably from 1% to 3%, by weight of the lipidic composition.

21. Lipidic composition according to claims 1 to 17, **characterized in that** the rapeseed oil is partly replaced or supplemented by kiwi pip oil with a kiwi pip oil content comprised from 0,5% to 4%, and preferably from 1% to 3%, by weight of the lipidic composition.

22. Lipidic composition according to claims 1 to 17, **characterized in that** the rapeseed oil is partly replaced or supplemented by gold of pleasure oil with a gold of pleasure oil content comprised from 0,5% to 9%, and preferably from 1% to 8%, by weight of the lipidic composition.

23. Lipidic composition according to claims 1 to 17, **characterized in that** the natural vitamin E content (alpha-tocopherol) of the composition oils is completed by adding natural alpha-tocopherol at a rate of 0,004% to 0,08% and preferably 0,01% to 0,06% by weight of the lipidic composition.

24. Lipidic composition according to claims 1 to 17, **characterized in that** the natural
vitamin E content (alpha-tocopherol) of the composition oils is completed by adding synthetic alpha-tocopherol acetate from 0,006% to 0,12%, and preferably from 0,015% to 0,09%, by weight of the lipidic composition.

25. Lipidic composition according to claims 1 to 17, **characterized in that** the natural vitamin E content (alpha-tocopherol) of the composition oils is completed by adding an antioxidant mixture of natural tocopherols with contents at a rate of 0,01% to 0,05%, and preferably from 0,02% to 0,04% by weight of the lipidic composition.

26. Lipidic composition according to claims 1 to 17, **characterized in that** the first aromatic and sapid substance is a virgin hazelnut oil possibly roasted, which content is comprised from 0,1% to 8%, preferably from 0,2% to 5 %, and even more preferably from 0,3% to 2%, by weight of the lipidic composition.

27. Lipidic composition according to claims 1 to 17, **characterized in that** the second aromatic and sapid substance is an essential oil from citrus fruit whose content is comprised from 0,001 % to 0,010%, by weight of the lipidic composition.

28. Lipidic composition according to claims 1 to 17, **characterized in that** it contains natural antioxidant extracts rich in phenolic compounds, in particular rosemary or sage, whose content is comprised from 0,005% to 0,2%, by weight of the lipidic composition.

29. Lipidic composition according to claims 1 to 17, **characterized in that** it is supplemented by retinol (vitamin A) in particular at contents between 5000 to 15000 µg of retinol per kg of lipidic composition.

30. Lipidic composition according to claims 1 to 17, **characterized in that** it is supplemented by β-carotene (provitamin A), in particular at contents between 30 to 90 mg of β-carotene per kg of lipidic composition.

31. Lipidic composition according to any of the preceding claims 1 to 17, **characterized in that** it includes:
- 0,05 to 0,12% of C14:0 fatty acid,
- 4,2 to 4,9%, notably 4,2 to 4,6% of C16:0 fatty acid,
- 0,2 to 0,3% of C16:1 fatty acid,
- 0,04 to 0,06% of C17:0 fatty acid,
- 0,05 to 0,08% of C17:1 fatty acid,
- 1,7 to 2,2% of C 18:0 fatty acid,
- 63 to 70% of C18:1 fatty acid,
- 14 to 19% of C18:2 ω6 fatty acid,
- 5,0 to 7,2%, notably 5,0 to 7,0% of C18:3 ω3 fatty acid,
- 0,4 to 0,6 % of C20:0 fatty acid,
- 0,8 to 1,5 % of C20:1 fatty acid,
- 0,04 to 0,11 % of C20:2 fatty acid,
- 0,04 to 0,09 % of C20:5 ω3 (EPA) fatty acid,
- 0,3 to 0,6 % of C22:0 fatty acid,
- 0,1 to 0,3 % of C22:1 fatty acid,
- 0,01 to 0,02 % of C22:5 ω3 (DPA) fatty acid,
- 0 to 0,13 % of C22:5 ω6 (DPA) fatty acid,
- 0,24 to 0,76 %, notably 0,24 to 0,66% of C22:6 ω3 (DHA) fatty acid,
- 0,1 to 0,2 % of C24:0 fatty acid, and
- 0,07 to 0,12 % of C24:1 fatty acid.

32. Lipidic composition according to any of the preceding claims 1 to 17, **characterized in that** it includes:
- 0,07% of C14:0 fatty acid,
- 4,34% of C16:0 fatty acid,
- 0,24% of C 16:1 fatty acid,
- 0,05% of C17:0 fatty acid,
- 0,06% of C17:1 fatty acid,
- 1,84% of C18:0 fatty acid,
- 68,12% of C 18:1 fatty acid,
- 16,15% of C 18:2 ω6 fatty acid,
- 6,05% of C18:3 ω3 fatty acid,
- 0,46% of C20:0 fatty acid,
- 0,99% of C20:1 fatty acid,
- 0,05% of C20:2 fatty acid,
- 0,06% of C20:5 ω3 (EPA) fatty acid,
- 0,42% of C22:0 fatty acid,
- 0,19% of C22:1 fatty acid,
- 0,01% of C22:5 ω3 (DPA) fatty acid,
- 0,29% of C22:6 ω3 (DHA) fatty acid,
- 0,17% of C24:0 fatty acid and
- 0,10% of C24:1 fatty acid.

33. Lipidic composition according to any of the preceding claims 1 to 30, **characterized in that** it includes:
- 63 to 77% of refined rapeseed oil,
- 23 to 37% of sunflower oil with high oleic acid content,
- 0,75 to 1,15% of DHA rich fish oil,
- 0,3 to 2% of virgin hazelnut oil, possibly coffee roasted,
- 0,02% to 0,04% of naturals tocopherols mix,
- 0,001% to 0,01% of essential citrus fruit oil.
- 40 µg to 60 µg of vitamin D per kg of lipidic composition.

34. Lipidic composition according to any of the preceding claims 1 to 30, **characterized in that** it includes:
- 63 to 77% of refined rapeseed oil,
- 23 to 37% of sunflower oil with high oleic acid content,
- 0,70 to 0,80% of DHA rich microalgale oil,
- 0,3 to 2% of virgin hazelnut oil, possibly coffee roasted,
- 0,02% to 0,04% of naturals tocopherols mix,
- 0,001 % to 0,01 % of essential citrus fruit oil,
- 40 µg to 60 µg of vitamin D per kg of lipidic composition.

35. Lipidic composition according to any of the preceding claims 1 to 30, **characterized in that** it includes:
- 70% of refined rapeseed oil,
- 28,5% of sunflower oil with high oleic acid content,
- 1 % of DHA rich fish oil,
- 0,5% of virgin hazelnut oil, possibly coffee roasted,
- 0,03% of naturals tocopherols mix,
- 0,003% of essential citrus fruit oil,
- 50 µg of vitamin D per kg of lipidic composition.

36. Lipidic composition according to any of the preceding claims 1 to 30, **characterized in that** it includes:
- 70% of refined rapeseed oil,
- 28,7% of sunflower oil with high oleic acid content,
- 0,8% of DHA rich microalgale oil,
- 0,5% of virgin hazelnut oil, possibly coffee roasted,
- 0,03% of naturals tocopherols mix,
- 0,003% of essential citrus fruit oil,
- 50 µg of vitamin D per kg of lipidic composition.

37. Use of a lipidic composition according to any of the preceding claims 1 to 36, in vegetable food oil, intended to a use as seasoning oil, cooking oil or multipurpose oil.

38. Use of a lipidic composition according to any of the preceding claims 1 to 36, in an aromatic and/or flavored oil.

39. Use of a lipidic composition according to any of the preceding claims 1 to 36, in a condiment preparation, emulsified or not, vegetable oil based, chosen among mayonnaises, low-fat mayonnaises, salad and raw vegetables sauces, vinaigrettes, low-fat vinaigrettes, culinary sauces, intended to the seasoning or accompaniment of dishes.

40. Use of a lipidic composition according to any of the preceding claims 1 to 36, in a dietary supplement, chosen among capsules or gelatine capsules.

41. Use of a lipidic composition according to any of the preceding claims 1 to 36, in a milk-based and/or milk derivatives composition, chosen between creams, fermented milks, yoghurts, sauces, cheese and milk-based desserts.
